(19)

Europäisches
Patentamt

European
Patent Office

Office européen
des brevets

(11) **EP 4 645 784 A1**

(12) **EUROPEAN PATENT APPLICATION**
published in accordance with Art. 153(4) EPC

(43) Date of publication:
**05.11.2025 Bulletin 2025/45**

(21) Application number: **22970087.7**

(22) Date of filing: **27.12.2022**

(51) International Patent Classification (IPC):
**H04L 27/26** $^{(2006.01)}$    **H04J 13/00** $^{(2011.01)}$

(52) Cooperative Patent Classification (CPC):
**H04J 13/00; H04L 27/26**

(86) International application number:
**PCT/JP2022/048332**

(87) International publication number:
**WO 2024/142295 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **SHIBAIKE, Naoya**
  **Tokyo 100-6150 (JP)**
• **NAGATA, Satoshi**
  **Tokyo 100-6150 (JP)**
• **WANG, Jing**
  **Beijing 100190 (CN)**

(74) Representative: **Hoffmann Eitle**
**Patent- und Rechtsanwälte PartmbB
Arabellastraße 30
81925 München (DE)**

(54) **TERMINAL, WIRELESS COMMUNICATION METHOD, AND BASE STATION**

(57)    A terminal according to an aspect of the present disclosure includes: a receiving section that receives information indicating association between a demodulation reference signal (DMRS) port for a shared channel and a parameter for an orthogonal cover code (OCC); and a control section that controls, based on the information, mapping of the DMRS, wherein the information includes a parameter indicating an enhanced-type DMRS port corresponding to a frequency domain (FD)-OCC having a length of 4. According to an aspect of the present disclosure, communication is appropriately controlled even when the number of antenna ports is increased from the conventional number of antenna ports.

Parameters for PUSCH DM-RS configuration eType1.

| $p$ | CDM group $\lambda$ | $\Delta$ | $w_f(k')$ | | | | $w_t(l')$ | |
|---|---|---|---|---|---|---|---|---|
| | | | $k'=0$ | $k'=1$ | $k'=2$ | $k'=3$ | $l'=0$ | $l'=1$ |
| 0 | 0 | 0 | +1 | +1 | +1 | +1 | +1 | +1 |
| 1 | 0 | 0 | +1 | -1 | +1 | -1 | +1 | +1 |
| 2 | 1 | 1 | +1 | +1 | +1 | +1 | +1 | +1 |
| 3 | 1 | 1 | +1 | -1 | +1 | -1 | +1 | +1 |
| 4 | 0 | 0 | +1 | +1 | +1 | +1 | +1 | -1 |
| 5 | 0 | 0 | +1 | -1 | +1 | -1 | +1 | -1 |
| 6 | 1 | 1 | +1 | +1 | +1 | +1 | +1 | -1 |
| 7 | 1 | 1 | +1 | -1 | +1 | -1 | +1 | -1 |
| 8 | 0 | 0 | +1 | +j | -1 | -j | +1 | +1 |
| 9 | 0 | 0 | +1 | -j | -1 | +j | +1 | +1 |
| 10 | 1 | 1 | +1 | +j | -1 | -j | +1 | +1 |
| 11 | 1 | 1 | +1 | -j | -1 | +j | +1 | +1 |
| 12 | 0 | 0 | +1 | +j | -1 | -j | +1 | -1 |
| 13 | 0 | 0 | +1 | -j | -1 | +j | +1 | -1 |
| 14 | 1 | 1 | +1 | +j | -1 | -j | +1 | -1 |
| 15 | 1 | 1 | +1 | -j | -1 | +j | +1 | -1 |

FIG. 14

EP 4 645 784 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement, and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, Rel-18 NR), it is under study to increase the number of reference signal (for example, Demodulation Reference Signal (DMRS) / Phase Tracking Reference Signal (PTRS)) ports. Such new DMRS/PTRS ports different from existing DMRS/PTRS ports (also referred to as Rel-15 DMRS/PTRS ports) are also referred to as Rel-18 DMRS/PTRS ports.

Meanwhile, studies have not sufficiently been made on an antenna port table to be referred to in a case where Rel-18 antenna ports described above with the number of antenna ports increased are introduced. Unless this is appropriately defined, no suitable improvement in communication throughput/communication quality may be provided.

In view of this, the present disclosure has one object to provide a terminal, a radio communication method, and a base station that enable communication to be appropriately controlled even when the number of antenna ports is increased from the conventional number of antenna ports (for example, in Rel-17 NR). Solution to Problem

A terminal according to an aspect of the present disclosure includes: a receiving section that receives information indicating association between a demodulation reference signal (DMRS) port for a shared channel and a parameter for an orthogonal cover code (OCC); and a control section that controls, based on the information, mapping of the DMRS, wherein the information includes a parameter indicating an enhanced-type DMRS port corresponding to a frequency domain (FD)-OCC having a length of 4.

Advantageous Effects of Invention

An aspect of the present disclosure enables communication to be appropriately controlled even when the number of antenna ports is increased from the conventional number of antenna ports.

Brief Description of Drawings

[FIG. 1] FIG. 1 is a diagram to show an example of association between precoder types and TPMI indices.
[FIG. 2] FIG. 2 shows examples of parameters for PDSCH DMRS configuration type 1/type 2.
[FIG. 3] FIG. 3 shows examples of parameters for PUSCH DMRS configuration type 1/type 2.
[FIG. 4] FIGS. 4A and 4B are each a diagram to show an example of a PTRS-DMRS association field in Rel. 16.

[FIG. 5] FIG. 5 is a diagram to show an example of association (or association candidates) between DMRS ports - PUSCH antenna ports - PTRS ports.

[FIG. 6] FIG. 6 is a diagram to show an example of a PTRS-DMRS association field in Rel. 17.

[FIG. 7] FIGS. 7A and 7B are each a diagram to show another example of the PTRS-DMRS association field in Rel. 17.

[FIG. 8] FIGS. 8A to 8C are each a diagram to show an example of a new OCC.

[FIG. 9] FIGS. 9A and 9B are diagrams to show examples of parameters of enhanced-type-1/2 DMRSs for a PUSCH.

[FIG. 10] FIG. 10 is a diagram to show an example of an existing table used for determination of an offset of a subcarrier for a PUSCH PTRS.

[FIG. 11] FIG. 11 is a diagram to show an example of an existing table used for determination of an offset of a subcarrier for a PDSCH PTRS.

[FIG. 12] FIGS. 12A and 12B are diagrams to show examples of association between CDM groups, DMRS ports, and OCCs, for type 1/enhanced type 1.

[FIG. 13] FIGS. 13A and 13B are diagrams to show examples of association between CDM groups, DMRS ports, and OCCs, for type 2/enhanced type 2.

[FIG. 14] FIG. 14 shows an example of parameters for PUSCH DMRS configuration enhanced type 1 according to a zero-th embodiment.

[FIG. 15] FIG. 15 shows an example of parameters for PDSCH DMRS configuration enhanced type 1 according to the zero-th embodiment.

[FIG. 16] FIG. 16 shows an example of parameters for PUSCH DMRS configuration enhanced type 2 according to the zero-th embodiment.

[FIG. 17] FIG. 17 shows an example of parameters for PDSCH DMRS configuration enhanced type 2 according to the zero-th embodiment.

[FIG. 18] FIG. 18 is a diagram to show an example of a new table used for determination of an offset of a subcarrier for a PUSCH PTRS, according to a first embodiment.

[FIG. 19] FIGS. 19A and 19B are each a diagram to show an example of a new table used for determination of an offset of a subcarrier for a PUSCH PTRS, according to Embodiment 1-1.

[FIG. 20] FIGS. 20A to 20C are each a diagram to show a new table used for determination of an offset of a subcarrier for a PUSCH PTRS, according to a variation of Embodiment 1-1.

[FIG. 21] FIGS. 21A and 21B are each a diagram to show an example of a new table used for determination of an offset of a subcarrier for a PUSCH PTRS, according to Embodiment 1-2.

[FIG. 22] FIG. 22 is a diagram to show a new table used for determination of an offset of a subcarrier for a PUSCH PTRS, according to a variation of Embodiment 1-2.

[FIG. 23] FIGS. 23A and 23B are each a diagram to show an example of a new table used for determination of an offset of a subcarrier for a PUSCH PTRS, according to Embodiment 1-3.

[FIG. 24] FIG. 24 is a diagram to show a new table used for determination of an offset of a subcarrier for a PUSCH PTRS, according to a variation of Embodiment 1-3.

[FIG. 25] FIGS. 25A and 25B are each a diagram to show a new table used for determination of an offset of a subcarrier for a PUSCH PTRS, according to another variation of Embodiment 1-3.

[FIG. 26] FIG. 26 is a diagram to show an example of a schematic structure of a radio communication system according to one embodiment.

[FIG. 27] FIG. 27 is a diagram to show an example of a structure of a base station according to one embodiment.

[FIG. 28] FIG. 28 is a diagram to show an example of a structure of a user terminal according to one embodiment.

[FIG. 29] FIG. 29 is a diagram to show an example of a hardware structure of the base station and the user terminal according to one embodiment.

[FIG. 30] FIG. 30 is a diagram to show an example of a vehicle according to one embodiment.

Description of Embodiments

(PUSCH Precoder)

For NR, it is under study that a UE supports at least one of codebook (CB) based transmission and non-codebook (NCB) based transmission.

For example, it is under study that the UE judges a precoder (precoding matrix) for at least one of CB based uplink shared channel (Physical Uplink Shared Channel (PUSCH)) transmission and NCB based PUSCH transmission by using at least a reference signal for measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by a precoding-information-and-number-of-layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of a PMI specified by the TPMI, by codebookSubset.

Note that the precoder type may be specified by any one of full coherent (fully coherent, coherent), partial coherent, and non-coherent (non coherent) or a combination of at least two of them (which may be indicated, for example, by a parameter such as "fullyAndPartialAndNonCoherent" or "partialAndNonCoherent").

Full coherent may mean that all the antenna ports to be used for transmission are synchronized (which may be expressed as all the antenna ports are able to be matched in terms of phase, are able to be phase-controlled per coherent antenna port, are able to be appropriately applied with a precoder per coherent antenna port, or the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

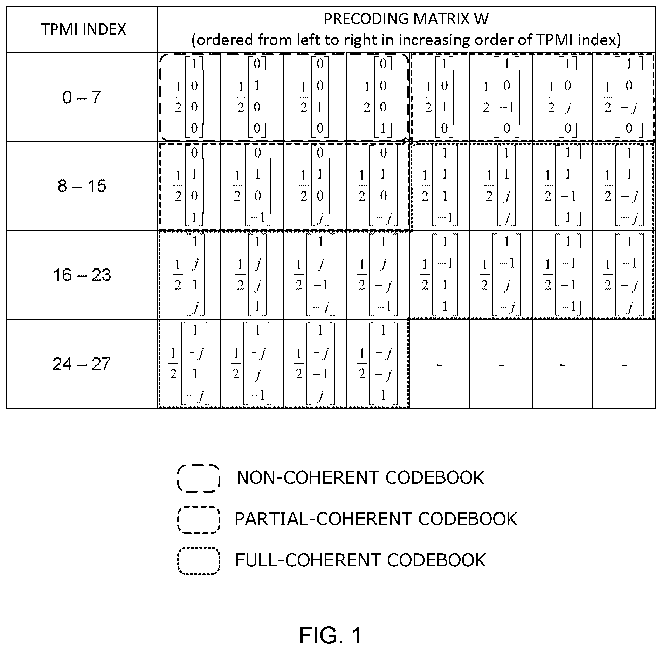

FIG. 1 is a diagram to show an example of association between precoder types and TPMI indices. FIG. 1 corresponds to a table of precoding matrices W for single-layer (rank 1) transmission using four antenna ports with DFT-s-OFDM (Discrete Fourier Transform spread OFDM, with transform precoding enabled).

In FIG. 1, in a case where a precoder type (codebookSubset) is fullyAndPartialAndNonCoherent, a UE is notified of a TPMI of any one of 0 to 27, for single-layer transmission. In a case where the precoder type is partialAndNonCoherent, the UE is configured with a TPMI of any one of 0 to 11, for single-layer transmission. In a case where the precoder type is nonCoherent, the UE is configured with a TPMI of any one of 0 to 3, for single-layer transmission.

Note that, as shown in FIG. 1, a precoding matrix with only one of the components in each column being other than 0 may be referred to as a non-coherent codebook. A precoding matrix with only a given number of components (not all) of the components in each column being other than 0 may be referred to as a partial coherent codebook. A precoding matrix with none of the components in each column being 0 may be referred to as a full coherent codebook.

The non-coherent codebook and the partial coherent codebook may each be referred to as an antenna selection precoder. The full coherent codebook may be referred to as a non-antenna selection precoder.

Note that, in the present disclosure, the partial coherent codebook may correspond to codebooks (i.e., codebooks of TPMI = 4 to 11 in a case of single-layer transmission with four antenna ports) obtained by excluding codebooks corresponding to TPMIs specified for a UE configured with a non-coherent codebook subset (for example, the RRC parameter "codebookSubset" = "nonCoherent") from codebooks (precoding matrices) corresponding to TPMIs specified, by DCI, for codebook based transmission, for a UE configured with a partial coherent codebook subset (for example, the RRC parameter "codebookSubset" = "partialAndNonCoherent").

Note that, in the present disclosure, the full coherent codebook may correspond to codebooks (i.e., codebooks of TPMI = 12 to 27 in the case of single-layer transmission with four antenna ports) obtained by excluding codebooks corresponding to TPMIs specified for a UE configured with the partial coherent codebook subset (for example, the RRC parameter "codebookSubset" = "partialAndNonCoherent") from codebooks (precoding matrices) corresponding to TPMIs specified, by DCI, for codebook based transmission, for a UE configured with a full coherent codebook subset (for example, the RRC parameter "codebookSubset" = "fullyAndPartialAndNonCoherent").

(DMRS)

A front-loaded DMRS (for example, DMRS used for demodulation of a PUSCH) is the first DMRS (DMRS in the first symbol or in a symbol near the first symbol) for faster demodulation. An additional DMRS can be configured by RRC, for a high speed moving UE or a high modulation and coding scheme (MCS)/rank. A frequency location of the additional DMRS is the same as that of the front-loaded DMRS.

For a time domain, DMRS mapping type A or B is configured. In DMRS mapping type A, DMRS location l_0 is counted by a symbol index in a slot. l_0 is configured by an MIB or a parameter (dmrs-TypeA-Position) in a common serving cell configuration (ServingCellConfigCommon). DMRS location 0 (reference point 1) means the first symbol of the slot or each frequency hop. In DMRS mapping type B, DMRS location l_0 is counted by a symbol index in a PDSCH/PUSCH. l_0 is always 0. DMRS location 0 (reference point 1) means the first symbol of the PDSCH/PUSCH or each frequency hop.

The DMRS location is defined by a table in a specification, and depends on duration of the PDSCH/PUSCH. The location of the additional DMRS is fixed.

For a frequency domain, (PDSCH/PUSCH) DMRS configuration type 1 or 2 is configured. DMRS configuration type 1 has a comb structure, and is applicable to both CP-OFDM (transport precoding = disabled) and DFT-S-OFDM (transport precoding = enabled). DMRS configuration type 2 is applicable only to CP-OFDM.

A single-symbol DMRS or a double-symbol DMRS is configured.

The single-symbol DMRS is normally used (is mandatory in Rel. 15). For the single-symbol DMRS, the number of additional DMRSs (symbols) is {0, 1, 2, 3}. The single-symbol DMRS supports both a case that frequency hopping is enabled and a case that frequency hopping is disabled. If no maximum number (maxLength) in uplink DMRS configuration (DMRS-UplinkConfig) is configured, the single-symbol DMRS is used.

The double-symbol DMRS is used for more DMRS ports (especially for MU-MIMO). For the double-symbol DMRS, the number of additional DMRSs (symbols) is {0, 1}. The double-symbol DMRS supports a case that frequency hopping is disabled. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.

- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same RE (time and frequency resources) are referred to as a DMRS CDM group.

For DMRS configuration type 1 and single-symbol DMRS, four DMRS ports can be used. In each DMRS CDM group, two DMRS ports are multiplexed by an FD OCC having a length of 2. Between a plurality of DMRS CDM groups (two DMRS CDM groups), two DMRS ports are multiplexed by FDM.

For DMRS configuration type 1 and double-symbol DMRS, eight DMRS ports can be used. In each DMRS CDM group, two DMRS ports are multiplexed by an FD OCC having a length of 2, and two DMRS ports are multiplexed by a TD OCC. Between a plurality of DMRS CDM groups (two DMRS CDM groups), two DMRS ports are multiplexed by FDM.

For DMRS configuration type 2 and single-symbol DMRS, six DMRS ports can be used. In each DMRS CDM group, two DMRS ports are multiplexed by an FD OCC having a length of 2. Between a plurality of DMRS CDM groups (three DMRS CDM groups), three DMRS ports are multiplexed by FDM.

For DMRS configuration type 2 and double-symbol DMRS, twelve DMRS ports can be used. In each DMRS CDM group, two DMRS ports are multiplexed by an FD OCC having a length of 2, and two DMRS ports are multiplexed by a TD OCC. Between a plurality of DMRS CDM groups (three DMRS CDM groups), three DMRS ports are multiplexed by FDM.

Although an example of DMRS mapping type B is described here, this similarly applies to DMRS mapping type A.

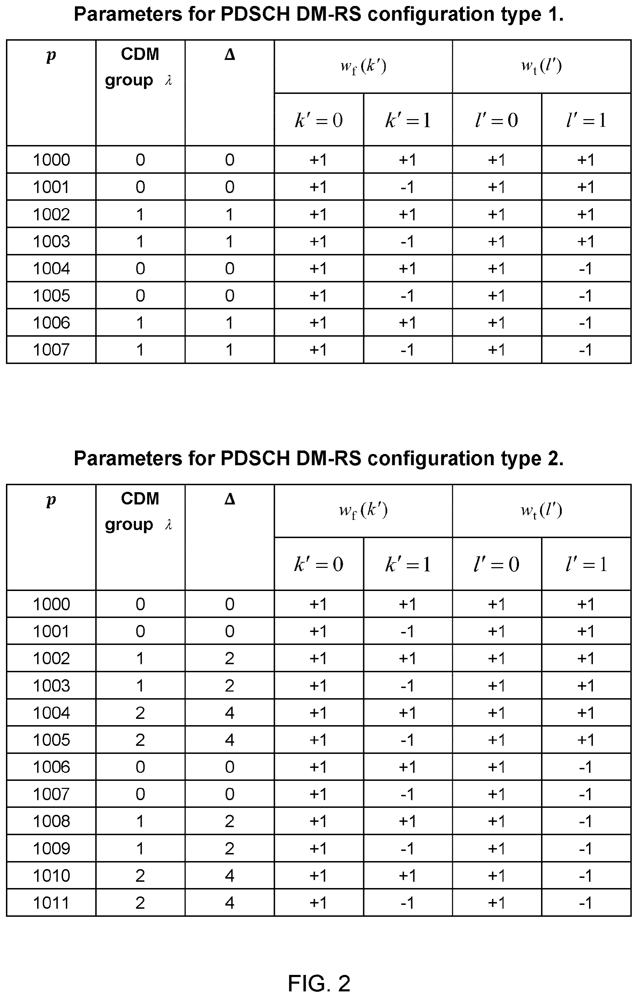

In parameters for a PDSCH DMRS (existing table, existing DMRS port table, FIG. 2), DMRS ports 1000 to 1007 can be used for DMRS configuration type 1 and DMRS ports 1000 to 1011 can be used for DMRS configuration type 2.

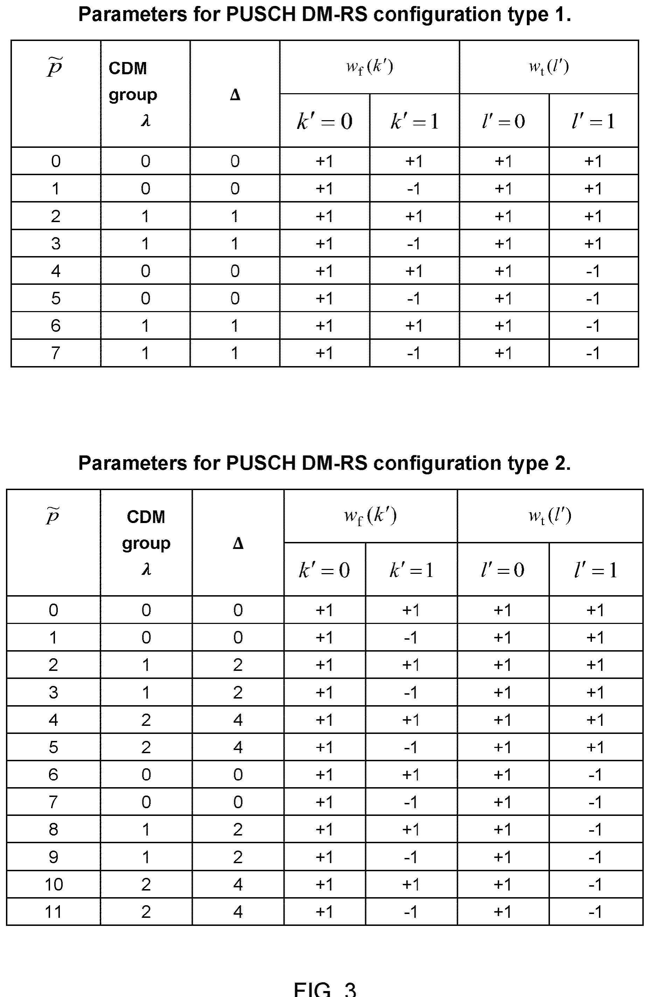

In parameters for a PUSCH DMRS (existing table, existing DMRS port table, FIG. 3), DMRS ports 0 to 7 can be used for DMRS configuration type 1 and DMRS ports 0 to 11 can be used for DMRS configuration type 2.

(Reference Signal Port)

For orthogonalization of MIMO layers and the like, a reference signal (for example, demodulation reference signal (DMRS), CSI-RS) with a plurality of ports is used.

For example, for single user MIMO (SU-MIMO), a different DMRS port/CSI-RS port may be configured per layer. For multi-user MIMO (MU-MIMO), a different DMRS port/CSI-RS port may be configured per layer in one UE and per UE.

Note that it is expected that using the number of CSI-RS ports greater than the number of layers used for data enables more accurate channel state measurement based on this CSI-RS, thereby contributing to throughput enhancement.

In Rel-15 NR, for a DMRS with a plurality of ports, up to 8 ports and up to 12 ports are supported in a case of type-1 DMRSs (in other words, DMRS configuration type 1) and a case of type-2 DMRSs (in other words, DMRS configuration type 2), respectively, by using frequency division multiplexing (FDM), a frequency domain orthogonal cover code (FD-OCC), a time domain OCC (TD-OCC), or the like.

In Rel-15 NR, as the above-described FDM, a comb-shaped transmission frequency pattern (comb-shaped resource set) is used. As the above-described FD-OCC, a cyclic shift (CS) is used. The above-described TD-OCC may be applied only to the double-symbol DMRS.

The "OCC" in the present disclosure may be interpreted as "orthogonal code," "orthogonalization," "cyclic shift," or the like, and vice versa.

Note that a DMRS type may be referred to as a DMRS configuration type.

Among DMRSs, a DMRS to which resource mapping in units of two consecutive (adjacent) symbols is applied may be referred to as a double-symbol DMRS, and a DMRS to which resource mapping in units of one symbol is applied may be referred to as a single-symbol DMRS.

The double-symbol DMRS and single-symbol DMRS may each be mapped to one or more symbols per slot, depending on a length of a data channel. A DMRS mapped to a start location of a data symbol may be referred to as a front-loaded DMRS, and a DMRS additionally mapped to a location other than the start location may be referred to as an additional DMRS.

In a case of DMRS configuration type 1 and single-symbol DMRS, Comb and a CS may be used for orthogonalization. For example, up to four antenna ports (APs) may be supported by using two types of Comb and two types of CS (Comb2+2CS).

In a case of DMRS configuration type 1 and double-symbol DMRS, Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and double-symbol DMRS, an FD-OCC and a TD-OCC may be used for orthogonalization. For example, up to twelve APs may be supported by applying an orthogonal code (2-FD-OCC) to two REs adjacent to each other in a frequency direction and applying a TD-OCC ({1, 1} and {1, -1}) to two REs adjacent to each other in a time direction.

In Rel-15 NR, for a CSI-RS with a plurality of ports, up to 32 ports are supported by using FDM, time division multiplexing (TDM), a frequency domain OCC, a time domain OCC, or the like. A method similar to that for the above-described DMRS may be applied to orthogonalization of the CSI-RS.

A group of DMRS ports orthogonalized by using such an FD-OCC/TD-OCC described above is also referred to as a code division multiplexing (CDM) group.

Different CDM groups are FDMed, and thus are orthogonal to each other. Meanwhile, there is a case where, in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS in Rel-15 NR will be described. A DMRS mapped to a resource element (RE) may correspond to a sequence obtained by multiplying a DMRS sequence by a parameter (which may be referred to as a sequence element or the like) $w_f(k')$ of an FD-OCC and a parameter (which may be referred to as a sequence element or the like) $w_t(l')$ of a TD-OCC.

Both of the TD-OCC and FD-OCC for the DMRS in Rel-15 NR correspond to an OCC of sequence length (which may be referred to as OCC length) = 2. For example, Rel-15 type-1/type-2 DMRS ports (for example, rel.15 Type1/Type2 DMRS ports) may be defined with DMRS ports having an FD-OCC length of 2 (for example, DMRS ports with FD-OCC length = 2).

Thus, a possible value of each of k' and l' described above is 0 or 1. Multiplying such an FD-OCC in units of RE enables DMRSs with two ports to be multiplexed by using the same time and frequency resources (2 REs). Applying both of the FD-OCC and TD-OCC enables DMRSs with four ports to be multiplexed by using the same time and frequency resources (4 REs).

The two existing DMRS port tables for the PDSCH (association between antenna port numbers and parameters) described above correspond to respective ones of DMRS configuration types 1 and 2. Note that p indicates an antenna port number and $\Delta$ indicates a parameter for shifting (offsetting) of a frequency resource.

For example, $\{w_f(0), w_f(1)\} = \{+1, +1\}$ and $\{w_f(0), w_f(1)\} = \{+1, -1\}$ are respectively applied to antenna ports 1000 and 1001, and thus the antenna ports are orthogonalized by using an FD-OCC.

Different values of $\Delta$ are applied to antenna ports 1000 to 1001 and antenna ports 1002 to 1003 (and further antenna ports 1004 to 1005 in a case of type 2), and thereby FDM is applied. Thus, antenna ports 1000 to 1003 (or 1000 to 1005) corresponding to a single-symbol DMRS are orthogonalized by using an FD-OCC and FDM.

$\{w_t(0), w_t(1)\} = \{+1, +1\}$ and $\{w_t(0), w_t(1)\} = \{+1, -1\}$ are respectively applied to antenna ports 1000 to 1003 and antenna ports 1004 to 1007 of type 1, and thus the antenna ports are orthogonalized by using a TD-OCC. Thus, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is provided between DL and UL DMRSs, that up to 24 orthogonal DMRS ports are used, and that, for each applicable DMRS configuration type, the maximum number of orthogonal DMRS ports is doubled for both the single-symbol DMRS and double-symbol DMRS.

In Rel. 15, Cases 1 to 4 below can be configured.

{Case 1} Single-symbol DMRS of DMRS configuration type 1

The total number of DMRS ports is 2 (by comb/FDM) x 2 (by FD OCC) = 4 ports.

{Case 2} Double-symbol DMRS of DMRS configuration type 1

The total number of DMRS ports is 2 (by comb/FDM) x 2 (by FD OCC) x 2 (by TD OCC) = 8 ports.

{Case 3} Single-symbol DMRS of DMRS configuration type 2

The total number of DMRS ports is 3 (by FDM) x 2 (by FD OCC) = 6 ports.

{Case 4} Double-symbol DMRS of DMRS configuration type 2

The total number of DMRS ports is 3 (by comb) x 2 (by FD OCC) x 2 (by TD OCC) = 12 ports.

For Rel. 18 or later versions, it is studied that the total numbers of DMRS ports are increased to 8, 16, 12, and 24 for Cases 1, 2, 3, and 4, respectively.

For example, for such increase in the number of DMRS ports, the following five options (methods of increasing the number of DMRS ports) are under study.

<Option 1>

- Introduction of a new OCC having a length (for example, 4 or 6) greater than that of an existing OCC.

In Option 1, items to be studied may include a possibility of performance degradation, a possibility of scheduling restriction, and backward compatibility in a case of a large delay spread.

<Option 2>

- Use of a TD-OCC over a plurality of non-consecutive DMRS symbols (for example, a TD-OCC over a front-loaded DMRS / additional DMRS).

In Option 2, items to be studied may include a possibility of performance degradation, a possibility of scheduling restriction (for example, a method of applying frequency hopping), a possibility of a limited DMRS configuration (for example, the number of additional DMRSs is limited), and backward compatibility in a case of a high UE speed.

<Option 3>

- Increase in the number of CDM groups (for example, increase in the number of combs / number of times of FDM).

In Option 3, items to be studied may include a possibility of performance degradation and backward compatibility in a case of a large delay spread.

<Option 4>

- Increase in the number of orthogonal DMRS ports by reusing additional DMRS symbols.

In Option 4, items to be studied may include a possibility of performance degradation, a possibility of a limited DMRS configuration (for example, the number of additional DMRSs is limited), and backward compatibility in a case of a high UE speed.

<Option 5>

- Use of a TD-OCC over a plurality of non-consecutive DMRS symbols, in combination with an FD-OCC/FDM (additional DMRS symbols are reused to improve channel estimation performance).

In Option 5, items to be studied may include a possibility of performance degradation, a possibility of scheduling restriction (for example, a method of applying frequency hopping), a possibility of a limited DMRS configuration (for example, the number of additional DMRSs is limited), and backward compatibility in a case of a high UE speed.
Option 1/3 may be supported. In addition, a TD OCC may be supported. A difference between Option 2 and Option 5 may include whether to support RRC-based semi-static switching or DCI-based dynamic switching between an FD-OCC and TD-OCC.
In Option 5 for the method of increasing the number of DMRS ports described above, a new FD-OCC having a length of 4 may be applied, a new TD-OCC having a length of 2 may be applied to a plurality of non-consecutive DMRS symbols, and the number of DMRS ports in one CDM group may be four. In this case, a reception side can decode either the FD-OCC or TD-OCC to separate signals from each other, and thus this has an advantage over Option 1/3. For example, the reception side can perform decoding by using only the FD-OCC, in a case where using the TD-OCC causes an issue such as a case that characteristic (orthogonality) deteriorates in high-speed movement or a case that channel estimation fails to be started even upon reception of only a front-loaded DMRS symbol and an additional DMRS symbol is required to be received, thus leading to delay in PDSCH decoding. For example, the reception side can perform decoding by using only the TD-OCC, in a case where using the FD-OCC causes an issue such as characteristic (orthogonality) deterioration in a case of a large delay spread.
In Option 5 for increase in the number of DMRS ports described above, a new FD-OCC having a length of 6 may be applied, and a new TD-OCC having a length of 2 may be applied to a plurality of non-consecutive DMRS symbols.
As described above, in Rel. 18 or later versions, a new FD-OCC having a length longer than 2 is supported. A DMRS port for type 1/type 2 for Rel. 18 or later versions may be referred to as a Rel-18 enhanced-type-1/enhanced-type-2 (enhanced type 1/enhanced type 2) DMRS port, for example. Enhanced type 1/enhanced type 2 may be referred to as e-type 1/e-type 2.
For example, Rel-18 e-type-1/e-type-2 DMRS ports may be defined with DMRS ports having an FD-OCC length longer than 2 (for example, DMRS ports with FD-OCC length > 2). For example, a Rel-18 e-type-1/e-type-2 DMRS port may be of FD-OCC length = 4.
Note that a type-1/type-2 DMRS port with FD-OCC length = 2 defined from Rel. 15 may be referred to as a Rel-15 type-1/type-2 DMRS port.
The Rel-18 e-type-1 DMRS port may have port index p = #1000 to 1015. For example, for DMRS ports with new FD-OCC #0, 1, DMRS port indices (DMRS ports #1000 to #1007) the same as that of the Rel-15 DMRS ports may be used. For DMRS ports with new FD-OCC #2, 3, DMRS port indices (DMRS ports #1008 to #1015) different from that of the Rel-15 DMRS ports may be used.

The Rel-18 e-type-2 DMRS port may have port index p = #1000 to 1023. For DMRS ports with new FD-OCC #0, 1, DMRS port indices (DMRS ports #1000 to #1011) the same as that of the Rel-15 DMRS ports may be used. For DMRS ports with new FD-OCC #2, 3, DMRS port indices (DMRS ports #1012 to #1023) different from that of the Rel-15 DMRS ports may be used.

(PTRS)

In Rel-15 NR, a phase tracking reference signal (PTRS) is supported. A base station may transmit a PTRS in downlink. In a given number of (for example, one) subcarrier(s), the base station may transmit PTRSs mapped continuously or discontinuously in the time direction.

A UE may receive a PTRS in, for example, at least part of a period (such as slot or symbol) where a downlink shared channel (Physical Downlink Shared Channel (PDSCH)) is scheduled (in other words, a period to receive the PDSCH). A PTRS transmitted by the base station may be referred to as a DL PTRS.

The UE may transmit a PTRS in uplink. In a given number of (for example, one) subcarrier(s), the UE may transmit PTRSs mapped continuously or discontinuously in the time direction.

The UE may transmit a PTRS in, for example, at least part of a period (such as slot or symbol) where an uplink shared channel (Physical Uplink Shared Channel (PUSCH)) is scheduled (in other words, a period to transmit the PUSCH). A PTRS transmitted by the UE may be referred to as a UL PTRS.

The base station or UE may determine, based on a received PTRS, phase noise and correct a phase error of a received signal (for example, PUSCH or PDSCH).

The UE may be configured with PTRS configuration information (PTRS-DownlinkConfig for DL or PTRS-UplinkConfig for UL), by using higher layer signaling. For example, the PTRS configuration information may be included in configuration information (DMRS-DownlinkConfig or DMRS-UplinkConfig) of a demodulation reference signal (DMRS) for a PDSCH or PUSCH.

(PTRS and DMRS)

In NR (for example, Rel. 15), it is assumed that a DMRS port associated with a PTRS port is QCL in terms of QCL types A and D. In other words, when a given PTRS port is associated with a given DMRS port, the PTRS port and DMRS port may be assumed to be in relationship of QCL types A and D with each other.

In Rel-16 NR, it is supported that association between a PTRS port and a DMRS port (for example, PTRS-DMRS association) is indicated by a given field in DCI. The given field may be referred to as an association-between-PTRS-and-DMRS field or a PTRS-DMRS related field (for example, PTRS-DMRS association field).

Incidentally, for Rel-16 NR, it is agreed to support up to two PTRS ports (first PTRS port and second PTRS port), for single-PDCCH-based multi-panel/TRP transmission. The number of PTRS ports applied/configured (for example, one or two PTRS ports) may be notified to a UE by using a higher layer parameter.

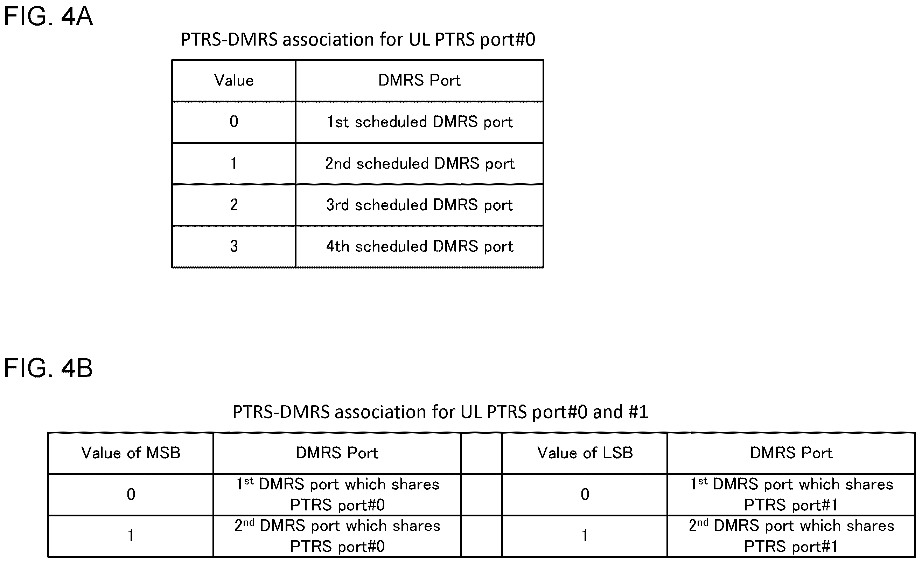

In a case where one PTRS port (for example, PTRS port #0) is configured, association between the PTRS and DMRSs may be determined based on codepoints specified by a PTRS-DMRS association field in DCI and on a correspondence relation (for example, table) between the codepoints and DMRS ports. The correspondence relation (for example, table) between the codepoints and DMRS ports may be defined in advance (see FIG. 4A).

FIG. 4A shows a case where, to the codepoints (here, 0 to 3) in the PTRS-DMRS association field, given DMRS ports correspond (here, first to fourth scheduled DMRS ports respectively corresponds).

In a case where two PTRS ports (for example, PTRS port #0 and PTRS port #1) are configured, association between each PTRS and DMRSs may be determined based on codepoints specified by a PTRS-DMRS association field in DCI and on a correspondence relation (for example, table) between the codepoints and DMRS ports. The correspondence relation (for example, table) between the codepoints and DMRS ports may be defined in advance (see FIG. 4B).

For example, part of a plurality of codepoints (for example, most significant bit (MSB) may be used for specification of DMRS ports for PTRS port #0, and the rest of the codepoints (for example, least significant bit (LSB) may be used for specification of DMRS ports for PTRS port #1.

FIG. 4B shows a case where a first DMRS out of DMRSs sharing PTRS #0 is specified when the MSB (here, one bit) is "0" and a second DMRS out of the DMRSs sharing PTRS #0 is specified when the MSB is "1." In addition, a case is shown where a first DMRS out of DMRSs sharing PTRS #1 is specified when the LSB (here, one bit) is "0" and a second DMRS out of the DMRSs sharing PTRS #1 is specified when the LSB is "1."

Information related to DMRSs (for example, first DMRS/second DMRS) sharing each of the PTRSs (here, PTRS #0 and #1) may be defined in advance in a specification or may be explicitly or implicitly notified, to a UE, from a base station by DCI/RRC.

For example, a PUSCH antenna port corresponding to each PTRS port may be defined/configured in advance and given information related to a correspondence relation between the PUSCH antenna port and a DMRS port may be notified to a UE by DCI/RRC. Based the information related to the correspondence relation between the DMRS port and the PUSCH antenna port notified from the base station and on the correspondence relation between the PUSCH antenna port and the PTRS port defined in advance, the UE may judge association between the DMRS port and the PTRS port.

The given information related to the correspondence relation between the PUSCH antenna port and the DMRS port may be indicated to the UE by using a given field included in DCI (for example, DCI used for scheduling of a PUSCH). The given field may be at least one of a precoding-information-and-number-of-layers field ("Precoding information and number of layers" field) and an antenna port field ("Antenna ports" field).

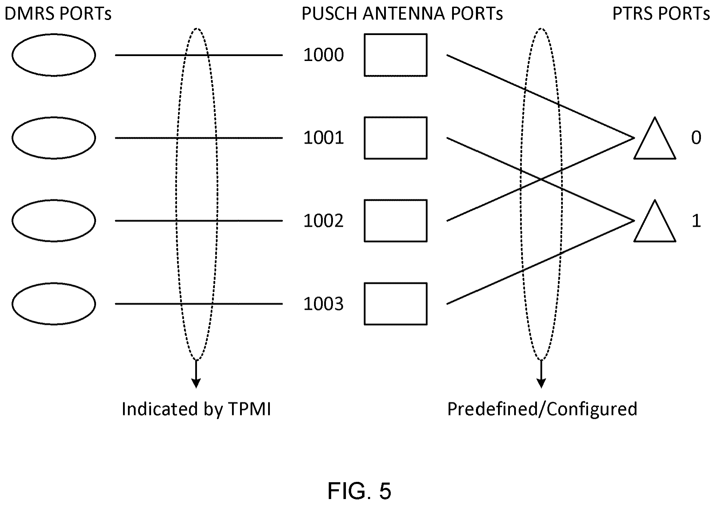

For example, it may be defined that PUSCH antenna ports 1000 and 1002 in an indicated transmitted precoding matrix indicator (TPMI) share PTRS port #0 and PUSCH antenna ports 1001 and 1003 in the indicated TPMI share PTRS port #1. The TPMI may be specified by the precoding-information-and-number-of-layers field ("Precoding information and number of layers" field) in the DCI (see FIG. 5).

PTRS port #0 may be associated with UL layer 'x' of a plurality of layers transmitted with the PUSCH antenna port 1000 and PUSCH antenna port 1002 in the indicated TPMI. PTRS port #1 may be associated with UL layer "y" of a plurality of layers transmitted with the PUSCH antenna port 1001 and PUSCH antenna port 1003 in the indicated TPMI. x/y may be given by the PTRS-DMRS association field included in the DCI (for example, FIG. 4B).

It may be defined in a specification that the PUSCH antenna ports 1000 and 1002 share PTRS port #0 and the PUSCH antenna ports 1001 and 1003 share PTRS port #1. Given information (hereinafter, also simply referred to as "TPMI") from the base station may indicate which layer/DMRS port is to be transmitted with which PUSCH antenna port. This means that the TPMI indicates which layer/DMRS port shares which PTRS port. The PTRS-DMRS association field may indicate that one layer/DMRS port from among a plurality of layers/DMRS ports shares a PTRS port.

In Rel. 17, multi-TRP PUSCH repetition using time division multiplexing (TDM) (for example, TDM M-TRP PUSCH repetition) is supported. PTRS-DMRS association may be indicated in units of TRP.

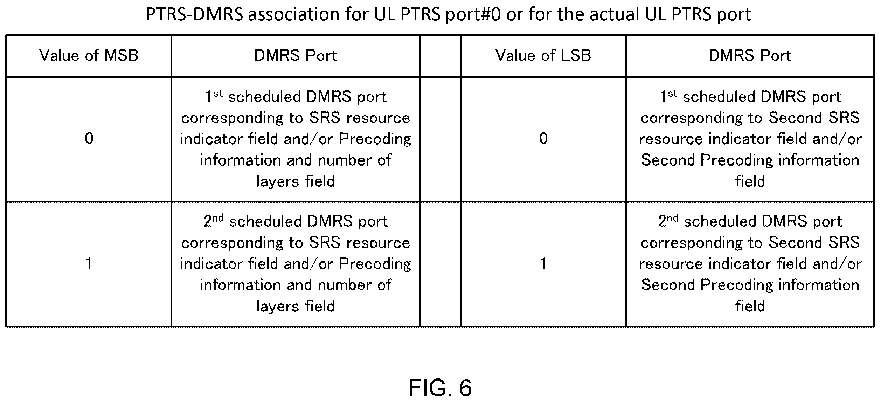

In a case where a maximum rank is 2 (for example, maxrank = 2) and one PTRS port is used, PTRS-DMRS association for two TRPs may be indicated by a PTRS-DMRS association field (for example, one field). For example, the MSB of the PTRS-DMRS association field may indicate a first TRP and the LSB of the PTRS-DMRS association field may indicate a second TRP (see FIG. 6).

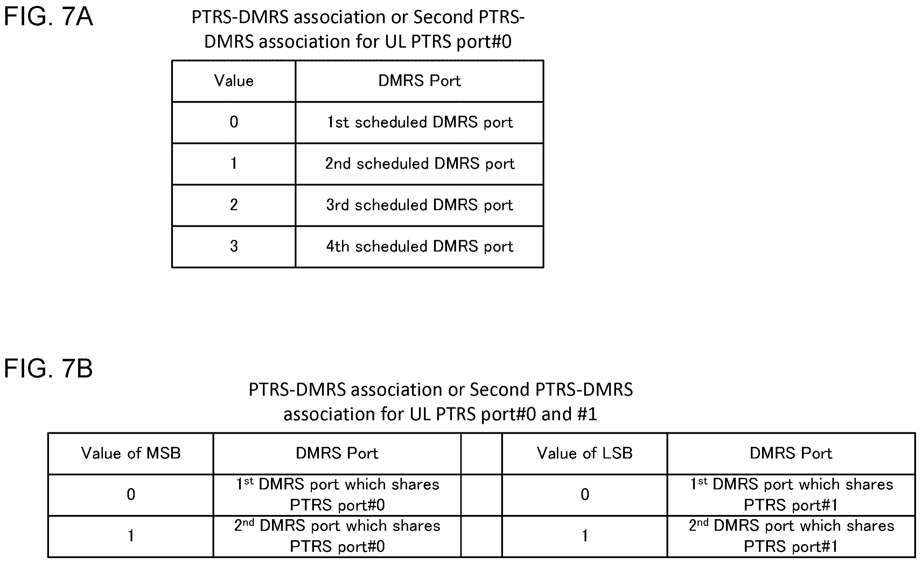

In a case where a maximum rank is more than 2 (for example, maxrank > 2) and one or two PTRS ports are used, PTRS-DMRS association for two TRPs may be indicated by a PTRS-DMRS association field and a second PTRS-DMRS association field (see FIGS. 7A and 7B). FIG. 7A shows an example of the PTRS-DMRS association field in a case where one PTRS is configured/applied. FIG. 7B shows an example of the PTRS-DMRS association field in a case where two PTRSs are configured/applied.

(New OCC for PDSCH/PUSCH DMRS)

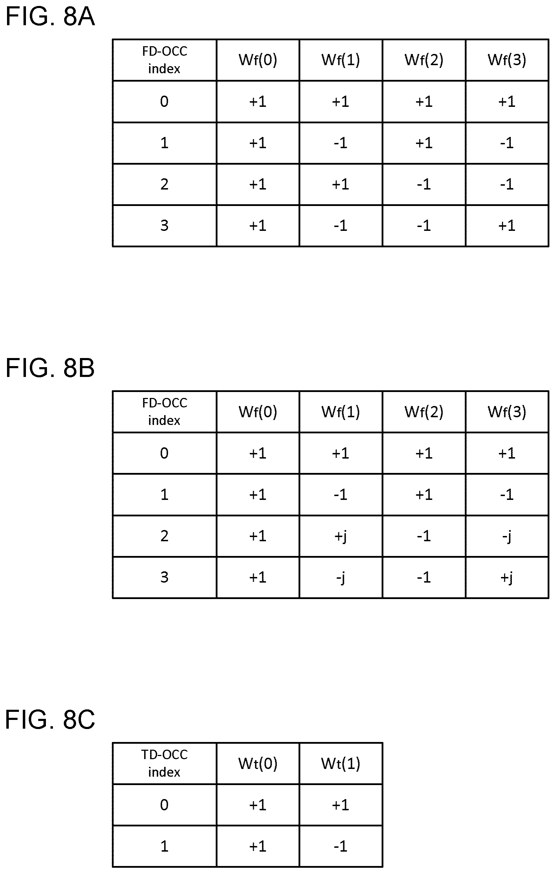

In Rel. 18, as new OCCs for a PDSCH/PUSCH DMRS (enhanced-type-1/enhanced-type-2 DMRS), an FD-OCC having a length of 4 and a TD-OCC having a length of 2 are supported. FIGS. 8A to 8C are each a diagram to show an example of a new OCC. The FD-OCC and TD-OCC may each be simply referred to as an OCC.

As shown in FIG. 8A, an FD-OCC having a length of 4 based on a 4-row 4-column Walsh matrix (sequence) may be defined. In FIG. 8A, for FD-OCC index i = {0, 1, 2, 3}, four sequences may be provided. The Walsh matrix may be interpreted as a Hadamard code. The OCC based on the Walsh matrix (sequence) is useful for DL reception (for example, PDSCH reception).

As shown in FIG. 8B, an OCC having a length of 4 based on a cyclic shift may be defined. In FIG. 8B, for FD-OCC index i = {0, 1, 2, 3}, four sequences may be provided with use of cyclic shift {i · 0, i · π, i · π/2, i · 3π/2}. The OCC based on the cyclic shift is useful for UL transmission (for example, PUSCH transmission).

As shown in FIG. 8C, a TD-OCC having a length of 2 may be defined. In FIG. 8C, for TD-OCC index i = {0, 1}, two sequences may be provided.

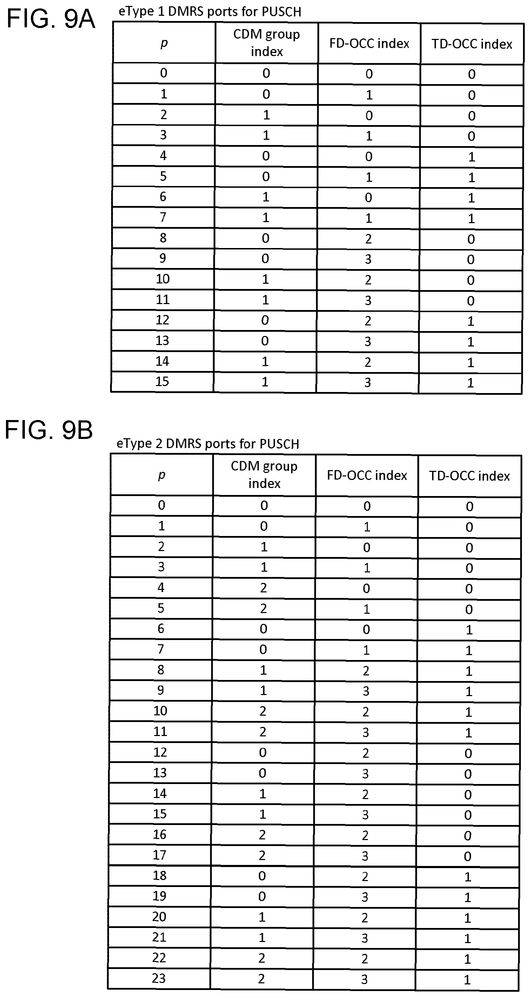

In association with the OCC shown in FIG. 8, a table for enhanced-type-1/enhanced-type-2 DMRSs (association between port indices, CDM group indices, and new OCC indices) may be defined. FIG. 9A shows an example of parameters of enhanced-type-1 DMRSs for a PUSCH. FIG. 9B shows an example of parameters of enhanced-type-2 DMRSs for a PUSCH. FIGS. 9A and 9B may each be separately defined for parameters for a PDSCH. In this case, a PDSCH port index may be indicated by a number of a PUSCH port index plus 1000.

(DMRS/PTRS Resource Element (RE) Mapping)

Subcarrier k (k indicates a subcarrier index) that a DMRS/PTRS for a PUSCH/PDSCH is mapped to may be expressed as below.

$$k = 4n + 2k' + \Delta \text{ (configuration type 1)}$$

or

$$k = 6n + k' + \Delta \text{ (configuration type 2)}$$

Here, values of n = 0, 1, ..., and k' = 0, 1 may be taken.

For example, a UE may assume that a PUSCH/PDSCH DMRS is mapped in accordance with configuration type 1 / configuration type 2 given by a higher layer parameter (dmrs-type) or may map the PUSCH/PDSCH DMRS.

When it is indicated that a PTRS is to be used in a resource block used for a PUSCH, a UE transmits the PTRS. The PTRS for the PUSCH may be mapped to an RE in accordance with the equation related to subcarrier k described above.

When it is indicated that, in a resource block used for a PDSCH, a PTRS is present and the PTRS is to be used, a UE may assume that the PTRS is present.

Offset $k_{ref}^{RE}$ in RE level may be applied to / associated with an expression for calculation of subcarrier k that the PTRS for the PUSCH/PDSCH is mapped to. Here, $k_{ref}^{RE}$ may indicate an offset value in units of RE for subcarrier k. $k_{ref}^{RE}$ may indicate a start location of subcarrier k for the PTRS (first PTRS subcarrier location).

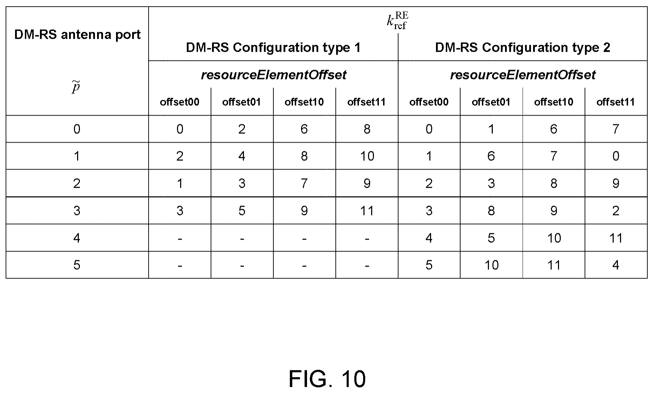

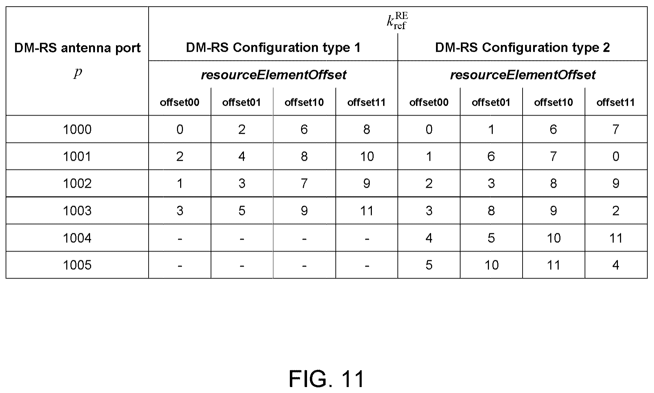

FIG. 10 is a diagram to show an example of an existing table used for determination of an offset of a subcarrier for a PUSCH PTRS. FIG. 11 is a diagram to show an example of an existing table used for determination of an offset of a subcarrier for a PDSCH PTRS.

As shown in FIGS. 10 and 11, offset $k_{ref}^{RE}$ described above may be defined per DMRS configuration type and per DMRS port. In other words, offset $k_{ref}^{RE}$ may be associated with a DMRS configuration type and a DMRS port. A UE may determine offset $k_{ref}^{RE}$, based on FIGS. 10 and 11. Offset $k_{ref}^{RE}$ may be determined by using a higher layer parameter.

As shown in FIG. 10, for offset $k_{ref}^{RE}$ of the PUSCH PTRS, DMRS ports 0 to 3 may be associated with DMRS configuration type 1 and DMRS ports 0 to 5 may be associated with DMRS configuration type 2. In other words, with respect to DMRS configuration type 1, DMRS ports 4 to 5 may be blank (no offset may be defined). For each type, four columns of offset (offset00, 01, 10, and 11) may be defined.

As shown in FIG. 11, for offset $k_{ref}^{RE}$ of the PDSCH PTRS, DMRS ports 1000 to 1003 may be associated with DMRS configuration type 1 and DMRS ports 1000 to 1005 may be associated with DMRS configuration type 2. In other words, with respect to DMRS configuration type 1, DMRS ports 1004 to 1005 may be blank (no offset may be defined). For each type, four columns of offset (offset00, 01, 10, and 11) may be defined.

Entries (offset values) in FIG. 10 may indicate parameters the same as the respective ones in FIG. 11. In other words, FIG. 10 is different from FIG. 11 only in the DMRS port indices (DMRS antenna ports).

(CDM Group)

As described above, a plurality of DMRS ports mapped to the same RE (time and frequency resources) may be referred to as a DMRS CDM group.

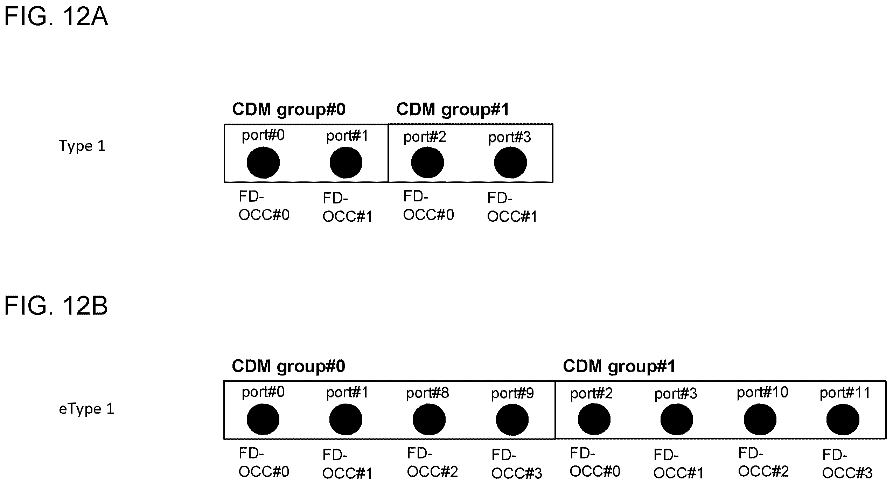

FIG. 12A is a diagram to show an example of association between CDM groups, DMRS ports, and OCCs, for type 1. FIG. 12B is a diagram to show an example of association between CDM groups, DMRS ports, and OCCs, for enhanced type 1.

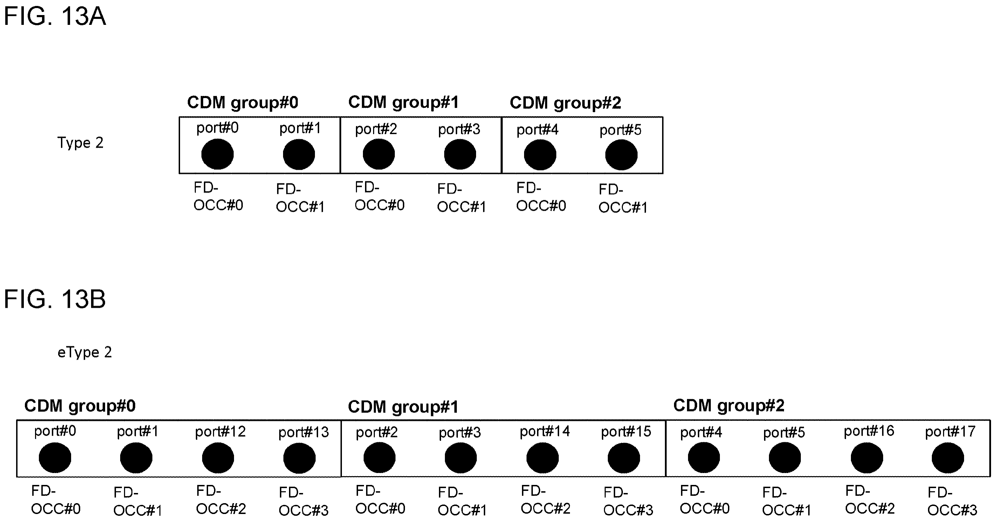

FIG. 13A is a diagram to show an example of association between CDM groups, DMRS ports, and OCCs, for type 2. FIG. 13B is a diagram to show an example of association between CDM groups, DMRS ports, and OCCs, for enhanced type 2.

DMRS ports in FIGS. 12A and 13A may be referred to as existing DMRS ports. DMRS ports in FIGS. 12B and 13B may be referred to as enhanced DMRS ports. Note that, in FIGS. 12 and 13, although examples of single-symbol DMRS are illustrated, the examples are not limited to this. The double-symbol DMRS is similarly applicable.

As shown in FIG. 12A, for DMRS configuration type 1 and single-symbol DMRS, four DMRS ports (ports #0 to 3) can be used. In each of the DMRS CDM groups (CDM groups #0 to 1), two DMRS ports (ports #0 to 1 or ports #2 to 3) are multiplexed by FD OCCs having a length of 2 (FD OCCs #0 to 1). Between the plurality of DMRS CDM groups (two DMRS CDM groups (CDM groups #0 to 1)), two DMRS ports are multiplexed by FDM.

As shown in FIG. 12B, for DMRS configuration enhanced type 1 and single-symbol DMRS, eight DMRS ports (ports #0 to 3 and 8 to 11) can be used. In each of the DMRS CDM groups (CDM groups #0 to 1), four DMRS ports (ports #0 to 1 and 8 to 9 or ports #2 to 3 and 10 to 11) are multiplexed by FD OCCs having a length of 4 (FD OCCs # 0 to 3). Between the plurality of DMRS CDM groups (two DMRS CDM groups (CDM groups #0 to 1)), two DMRS ports are multiplexed by FDM.

As shown in FIG. 13A, for DMRS configuration type 2 and single-symbol DMRS, six DMRS ports (ports #0 to 5) can be used. In each of the DMRS CDM groups (CDM groups #0 to 2), two DMRS ports (ports #0 to 1, ports #2 to 3, or ports #4 to 5) are multiplexed by FD OCCs having a length of 2 (FD OCCs #0 to 1). Between the plurality of DMRS CDM groups (three DMRS CDM groups (CDM groups #0 to 2)), three DMRS ports are multiplexed by FDM.

As shown in FIG. 13B, for DMRS configuration enhanced type 2 and single-symbol DMRS, twelve DMRS ports (ports #0 to 5 and 12 to 17) can be used. In each of the DMRS CDM groups (CDM groups #0 to 2), four DMRS ports (ports #0 to 1 and 12 to 13, ports #2 to 3 and 14 to 15, or ports #4 to 5 and 16 to 17) are multiplexed by FD OCCs having a length of 4 (FD OCCs # 0 to 3). Between the plurality of DMRS CDM groups (three DMRS CDM groups (CDM groups #0 to 2)), three DMRS ports are multiplexed by FDM.

As described above, in enhanced type 1 shown in FIG. 12B, DMRS ports corresponding to CDM group #0 are ports #0, 1, 8, and 9 and DMRS ports corresponding to CDM group #1 are ports #2, 3, 10, and 11. Here, a subcarrier including a PTRS needs to be any one of subcarriers with DMRSs. Based on such a rule, a PTRS to be associated with the above-described DMRS ports (ports #0, 1, 8, and 9) needs to be mapped to a subcarrier (any one of 0, 2, 4, 6, 8, and 10), and a PTRS to be associated with the DMRS ports (ports #2, 3, 10, and 11) needs to be mapped to a subcarrier (any one of 1, 3, 5, 7, 9, and 11).

In enhanced type 2 shown in FIG. 13B, DMRS ports corresponding to CDM group #0 are ports #0, 1, 12, and 13, DMRS ports corresponding to CDM group #1 are ports #2, 3, 14, and 15, and DMRS ports corresponding to CDM group #2 are ports #4, 5, 16, and 17. As described above, a subcarrier including a PTRS needs to be any one of subcarriers with DMRSs. Based on such a rule, a PTRS to be associated with the above-described DMRS ports (ports #0, 1, 12, and 13) needs to be mapped to a subcarrier (0, 1, 6, 7), a PTRS to be associated with the DMRS ports (ports #2, 3, 14, and 15) needs to be mapped to a subcarrier (2, 3, 8, 9), and a PTRS to be associated with the DMRS ports (ports #4, 5, 16, and 17) needs to be mapped to a subcarrier (4, 5, 10, 11).

(Analysis)

As described above, in Rel. 18, an FD-OCC having a length of 4 is supported. In this case, how to control indication of DMRS ports (for example, DMRS ports 8 or more in a case of enhanced type 1, DMRS ports 12 or more in a case of enhanced type 2) newly supported in Rel. 18 is an issue. Studies have not sufficiently been made on an antenna port table and the like to be referred to in such a case. Unless this is clearly defined, no suitable improvement in communication throughput/communication quality may be provided.

In view of this, the inventors of the present invention came up with the idea of a control method for a case where Rel-18 DMRS/PTRS ports are defined.

Embodiments according to the present disclosure will be described in detail with reference to the drawings as follows. Note that embodiments (for example, cases) below may each be employed individually, or may be employed in combination of at least two of them.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

Note that a CORESET pool and a CORESET pool index may be interchangeably interpreted.

In the present disclosure, expression "Rel. XX" represents a 3GPP release. Note that the release number "XX" is an example, and may be replaced with another number.

In the present disclosure, a DMRS, a DL DMRS, a UL DMRS, a PDSCH DMRS, and a PUSCH DMRS may be interchangeably interpreted.

In the present disclosure, an orthogonal sequence, an OCC, an FD OCC, and a TD OCC may be interchangeably interpreted.

In the present disclosure, a DMRS port, an antenna port, a port, and a DMRS port index may be interchangeably interpreted. In the present disclosure, DMRS CDM group(s), CDM group(s), DMRS group(s), DMRS CDM group(s) without data, and the like may be interchangeably interpreted. In the present disclosure, antenna port indication and an antenna port field may be interchangeably interpreted. In the present disclosure, a DMRS configuration type, a DMRS type, and an RRC parameter "dmrs-Type" may be interchangeably interpreted. In the present disclosure, a maximum DMRS length, a maximum number of DMRS symbols, the number of DMRS symbols, and an RRC parameter "maxLength" may be interchangeably interpreted.

In the present disclosure, DMRS type 1 (or DMRS type = 1) may mean that no RRC parameter "dmrs-Type" is configured (for example, the RRC parameter "dmrs-Type" is absent in a DMRS configuration (DMRS-DownlinkConfig information element / DMRS-UplinkConfig information element)), or may mean that "1" (or type 1 (type1)) is configured as an RRC parameter related to the DMRS type.

In the present disclosure, maximum DMRS length = 1 may mean that no RRC parameter "maxLength" is configured (for example, the RRC parameter "maxLength" is absent in the DMRS configuration (DMRS-DownlinkConfig information element / DMRS-UplinkConfig information element)), or may mean that "1" (or a length of 1 (len1)) is configured as an RRC parameter related to the maximum DMRS length.

In the present disclosure, a CDM group list, a port group list, and a list may be interchangeably interpreted. In the present disclosure, a CDM group subset, a port group subset, and a group subset may be interchangeably interpreted.

In the present disclosure, a rank, a transmission rank, the number of layers, and the number of antenna ports may be interchangeably interpreted. A case that one codeword is applied and a case that the number of layers is 4 layers or smaller may be interchangeably interpreted. A case that two codewords are applied and a case that the number of layers is greater than 4 layers may be interchangeably interpreted.

In the present disclosure, "transform precoding is configured" and "transform precoding is configured to be enabled" may be interchangeably interpreted.

Note that, in the present disclosure, "having capability of ..." and "supporting/reporting capability of ..." may be interchangeably interpreted.

In the present disclosure, a table and one or a plurality of tables may be interchangeably interpreted.

In the present disclosure, STxMP, SiMPUL, simultaneous transmission using multi-panel, multi-panel simultaneous transmission, and multi-panel simultaneous UL transmission may be interchangeably interpreted. STxMP may mean that one PUSCH/PUCCH/SRS is indicated/configured with a plurality of joint/UL TCI states, spatial relations, or beams. In the present disclosure, supporting and being configured/indicated may be interchangeably interpreted. In the present disclosure, transmit power and output power may be interchangeably interpreted. In the present disclosure, determination by a UE and configuration/indication by a network (base station/gNB) may be interchangeably interpreted.

In the present disclosure, a UL panel, a UE panel, a (same) antenna coherent group, a UL/joint TCI, a spatial relation, a PL-RS, and a (same) destination TRP may be interchangeably interpreted.

In the present disclosure, 8Tx and UL transmission with more than 4 layers/ranks may be interchangeably interpreted.

In the present disclosure, a Rel-15 DMRS port, a Rel-15 type-1/2 DMRS port, and an existing DMRS port may be interchangeably interpreted. In the present disclosure, a Rel-18 DMRS port, a Rel-18 enhanced-type-1/2 DMRS port, and a new DMRS port may be interchangeably interpreted. Note that a Rel-18 DMRS port may correspond to a DMRS port having the defined total number of ports twice or more (for example, twice, three times, four times, ...) as compared with a Rel-15 DMRS port.

In the present disclosure, a DMRS in a case where use of a Rel-15 DMRS port is configured or where use of a Rel-18 DMRS port is not configured (not enabled) may be referred to as a Rel-15 DMRS. In the present disclosure, a DMRS in a case where use of a Rel-18 DMRS port is configured (enabled) may be referred to as a Rel-18 DMRS. From among Rel-15 DMRSs, a DMRS for type 1/2 may be referred to as a Rel-15 type-1/2 DMRS, or simply referred to as a type-1/2 DMRS or the like. From among Rel-18 DMRSs, a DMRS for enhanced type 1/2 may be referred to as a Rel-18 enhanced-type-1/2 DMRS, or simply referred to as an enhanced-type-1/2 DMRS or the like.

In the present disclosure, a Rel-15 DMRS configuration type, a DMRS configuration type, and a type may be interchangeably interpreted. A Rel-18 DMRS configuration type, an enhanced DMRS configuration type, an enhanced type, and an e-type may be interchangeably interpreted.

Note that a case that a UE is configured with enhanced type 1/2 may correspond to a case that DMRS type (for example, dmrs-Type) = enhanced type 1/2 is configured, or may correspond to a case that DMRS enhanced type (for example, dmrs-EType) = 1/2 is configured.

In the present disclosure, an antenna port table and an antenna port indication table may be interchangeably interpreted. In the present disclosure, a DMRS port combination, a combination of DMRS ports, and one or more DMRS ports corresponding to one value in an antenna port field may be interchangeably interpreted.

In the present disclosure, a DMRS port, a PTRS port, a PUSCH antenna port, a PDSCH antenna port, an antenna port, and a port may be interchangeably interpreted.

In the present disclosure, a PTRS, a PTRS port, an entry of a new table, a parameter, an offset, and an offset value may be interchangeably interpreted.

(Radio Communication Method)

A DMRS port for a PDSCH may be specified by an antenna port field in a DCI format (for example, DCI format 1_1/1_2) for scheduling of the PDSCH.

A DMRS port for a PUSCH may be specified by an antenna port field in a DCI format (for example, DCI format 0_1/0_2) for scheduling of the PUSCH.

A UE may refer to a new antenna port table (which may be referred to as an antenna port table, an antenna port indication table, or the like) to judge an antenna port corresponding to a value of the antenna port field described above.

Note that a case that the UE uses a Rel-15 DMRS port may mean that antenna port indices $p$ of $p$ = #0 to 7 for type 1 and $p$ = #0 to 11 for type 2 are used (usable). A case that the UE uses a Rel-18 DMRS port may mean that antenna port indices $p$ of $p$ = #0 to 15 (or #8 to 15) for type 1 and $p$ = #0 to 23 (or #12 to 23) for type 2 are used (usable).

Note that, in the present disclosure, a port index for a PDSCH/PUSCH DMRS may correspond to a number (for example, #1000) obtained by adding 1000 to an illustrated number, or may correspond to the illustrated number itself (for example, #0). For a port index for a PDSCH/PUSCH DMRS, a port index for a PDSCH/PUSCH may correspond to a number obtained by adding or subtracting 1000 to or from the port index for the PDSCH/PUSCH DMRS, or may be the same as the port index for the PDSCH/PUSCH DMRS.

In the present disclosure, a DMRS port table, a PTRS port table, an antenna port table, and association between antenna port numbers and parameters (OCC parameters) may be interchangeably interpreted.

In the present disclosure, values/rows/columns in various tables may be interpreted as entries. Furthermore, the order of values/rows/columns in various tables may be changed.

<Zero-th Embodiment>

A zero-th embodiment describes a new antenna port table for DMRS mapping.

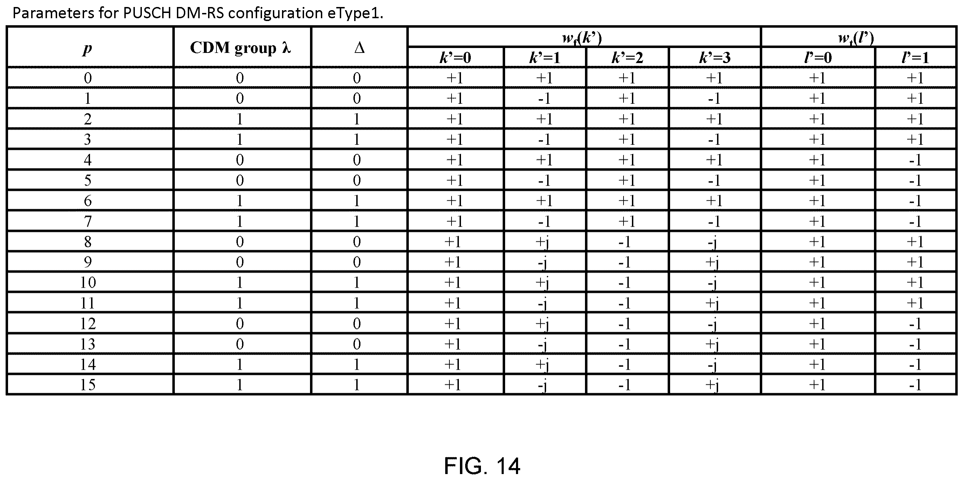

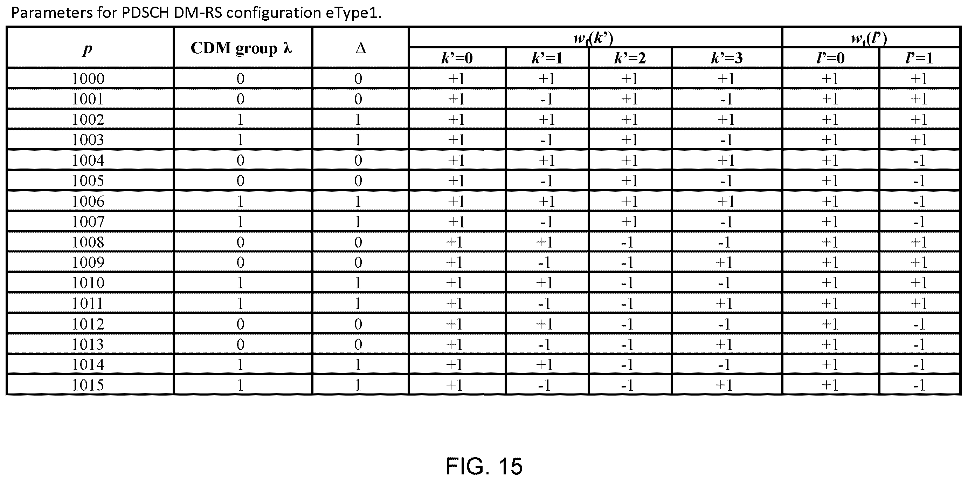

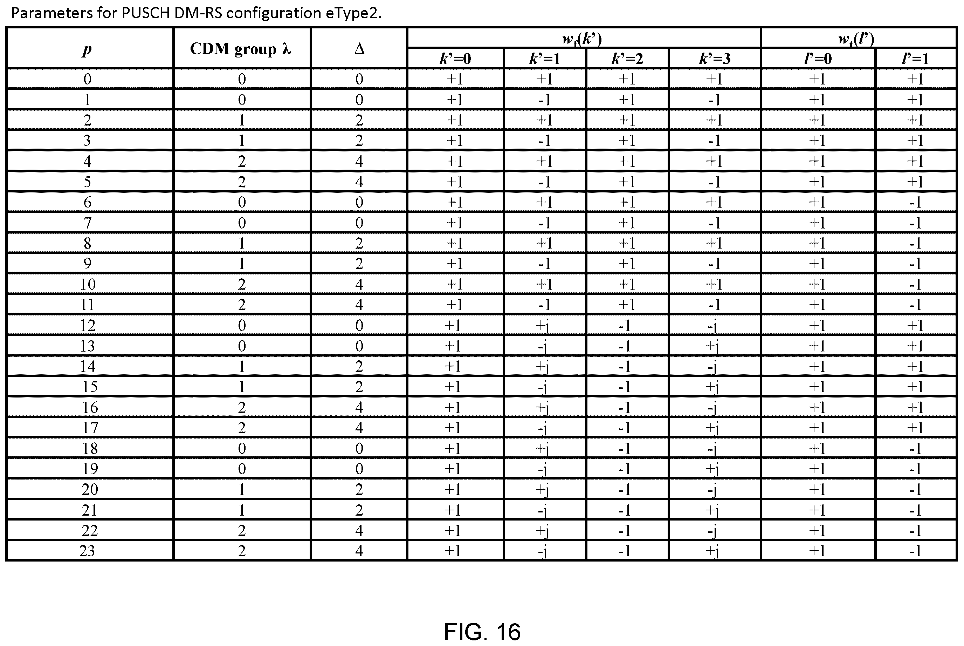

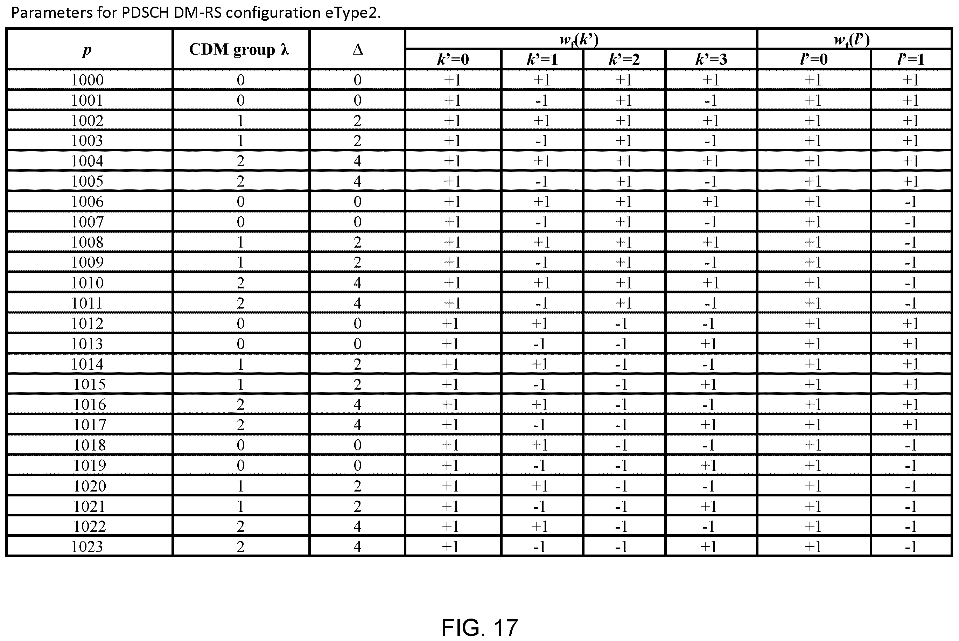

An antenna port table indicating parameters for PUSCH/PDSCH DMRS configuration enhanced type 1 / enhanced type 2 may be newly defined. FIGS. 14 to 17 are each a diagram to show an example of a new antenna port table for enhanced type 1/2. Specifically, FIGS. 14 and 16 each show parameters for PUSCH DMRS configuration enhanced type 1 / enhanced type 2 and FIGS. 15 and 17 each show parameters for PDSCH DMRS configuration enhanced type 1 / enhanced type 2.

As described above, $p$ indicates an antenna port number and $\Delta$ indicates a parameter for shifting (offsetting) of a frequency resource. $w_f(k')$ indicates a parameter of an FD-OCC. Note that, in Rel. 18, an FD-OCC having a length of 4 is supported, and thus a possible value of $k'$ is an integer of any one of 0 to 3. $w_t(l')$ indicates a parameter of a TD-OCC. Note that a possible value of $k'$ is an integer of any one of 0 to 1.

As shown in FIG. 14, in parameters for a PUSCH DMRS (new table, new DMRS port table), DMRS ports 0 to 15 can be used for DMRS configuration enhanced type 1 (eType1).

For example, for a PUSCH, in a case where Rel-15 (existing) DMRS configuration type 1 is configured/indicated, DMRS mapping may be controlled (determined) by using an existing table (the upper half of FIG. 3). In contrast, in a case where Rel-18 (new) DMRS configuration enhanced type 1 is configured/indicated, DMRS mapping may be controlled (determined) by using a new table (FIG. 14). In other words, separate tables may be defined for an existing DMRS and new DMRS, and a table to be applied may differ depending on a configured/indicated type.

Instead of the existing table (FIG. 3), only the new table (FIG. 14) may be defined. In this case, when Rel-15 (existing) DMRS configuration type 1 is configured/indicated, DMRS ports 0 to 7 in FIG. 14 can be used. In contrast, when Rel-18 (new) DMRS configuration enhanced type 1 is configured/indicated, DMRS ports 8 to 15 in FIG. 14 can be used. In other words, the new table may include, for existing DMRS ports 0 to 7, parameters the same as that in the existing table, and may include, for the new (enhanced) DMRS ports 8 to 15, new parameters corresponding to a new OCC. As described above, such a common existing/new DMRS table enables the table configuration to be simplified.

As shown in FIG. 15, in parameters for a PDSCH DMRS (new table, new DMRS port table), DMRS ports 1000 to 1015 can be used for DMRS configuration enhanced type 1 (eType1).

For example, for a PDSCH, in a case where Rel-15 (existing) DMRS configuration type 1 is configured/indicated, DMRS mapping may be controlled (determined) by using an existing table (the upper half of FIG. 2). In contrast, in a case where Rel-18 (new) DMRS configuration enhanced type 1 is configured/indicated, DMRS mapping may be controlled (determined) by using a new table (FIG. 15). In other words, separate tables may be defined for an existing DMRS and new DMRS, and a table to be applied may differ depending on a configured/indicated type.

Instead of the existing table (FIG. 2), only the new table (FIG. 15) may be defined. In this case, when Rel-15 (existing) DMRS configuration type 1 is configured/indicated, DMRS ports 1000 to 1007 in FIG. 15 can be used. In contrast, when Rel-18 (new) DMRS configuration enhanced type 1 is configured/indicated, DMRS ports 1008 to 1015 in FIG. 15 can be used. In other words, the new table may include, for existing DMRS ports 1000 to 1007, parameters the same as that in the existing table, and may include, for the new (enhanced) DMRS ports 1008 to 1015, new parameters corresponding to a new OCC. As described above, such a common existing/new DMRS table enables the table configuration to be simplified.

As shown in FIG. 16, in parameters for a PUSCH DMRS (new table, new DMRS port table), DMRS ports 0 to 23 can be used for DMRS configuration enhanced type 2 (eType2).

For example, for a PUSCH, in a case where Rel-15 (existing) DMRS configuration type 2 is configured/indicated, DMRS mapping may be controlled (determined) by using an existing table (the lower half of FIG. 3). In contrast, in a case where Rel-18 (new) DMRS configuration enhanced type 2 is configured/indicated, DMRS mapping may be controlled (determined) by using a new table (FIG. 16). In other words, separate tables may be defined for an existing DMRS and new DMRS, and a table to be applied may differ depending on a configured/indicated type.

Instead of the existing table (FIG. 3), only the new table (FIG. 16) may be defined. In this case, when Rel-15 (existing) DMRS configuration type 2 is configured/indicated, DMRS ports 0 to 11 in FIG. 16 can be used. In contrast, when Rel-18 (new) DMRS configuration enhanced type 2 is configured/indicated, DMRS ports 12 to 23 in FIG. 16 can be used. In other words, the new table may include, for existing DMRS ports 0 to 11, parameters the same as that in the existing table, and may include, for the new (enhanced) DMRS ports 12 to 23, new parameters corresponding to a new OCC. As described above, such a common existing/new DMRS table enables the table configuration to be simplified.

As shown in FIG. 17, in parameters for a PDSCH DMRS (new table, new DMRS port table), DMRS ports 1000 to 1023 can be used for DMRS configuration enhanced type 2 (eType2).

For example, for a PDSCH, in a case where Rel-15 (existing) DMRS configuration type 2 is configured/indicated, DMRS mapping may be controlled (determined) by using an existing table (the lower half of FIG. 2). In contrast, in a case where Rel-18 (new) DMRS configuration enhanced type 2 is configured/indicated, DMRS mapping may be controlled (determined) by using a new table (FIG. 17). In other words, separate tables may be defined for an existing DMRS and new DMRS, and a table to be applied may differ depending on a configured/indicated type.

Instead of the existing table (FIG. 2), only the new table (FIG. 17) may be defined. In this case, when Rel-15 (existing) DMRS configuration type 2 is configured/indicated, DMRS ports 1000 to 1011 in FIG. 17 can be used. In contrast, when Rel-18 (new) DMRS configuration enhanced type 2 is configured/indicated, DMRS ports 1012 to 1023 in FIG. 17 can be used. In other words, the new table may include, for existing DMRS ports 1000 to 1011, parameters the same as that in the existing table, and may include, for the new (enhanced) DMRS ports 1012 to 1023, new parameters corresponding to a new OCC. As described above, such a common existing/new DMRS table enables the table configuration to be simplified.

Subcarrier k that the DMRS/PTRS for the PUSCH/PDSCH is mapped to as described above may be extended, with extension in DMRS ports, as below.

$$k = 4n + 2k' + \Delta \text{ (configuration type 1 or enhanced type 1) or}$$
$$k = 6n + k' + \Delta \text{ (configuration type 2 or enhanced type 2)}$$

Here, values of $n = 0, 1, ...,$ and $k' = 0$ to 3 may be taken.

According to the zero-th embodiment, a UE is possible to appropriately judge a DMRS port to be used and map a DMRS, even when DMRS ports are extended.

<First Embodiment>

A first embodiment describes a new antenna port table for mapping of a PTRS corresponding to PUSCH/PDSCH DMRS configuration enhanced type 1 /enhanced type 2. In the following, although a PUSCH PTRS is mainly described as an example, the embodiment is not limited to this and may be applicable to a PDSCH PTRS. For example, a DMRS port for a PDSCH PTRS may be indicated with an index obtained by adding +1000 to that for a DMRS port for a PUSCH PTRS.

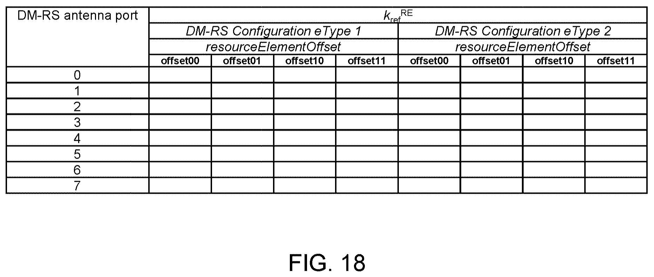

FIG. 18 is a diagram to show an example of a new table used for determination of an offset of a subcarrier for a PUSCH PTRS, according to the first embodiment. As shown in FIG. 18, offset $k_{ref}^{RE}$ described above may be defined per DMRS configuration type and per DMRS port. In other words, offset $k_{ref}^{RE}$ may be associated with a DMRS configuration type and a DMRS port. A UE may determine, based on FIG. 18, offset $k_{ref}^{RE}$ for a PTRS corresponding to enhanced type 1 / enhanced type 2. Offset $k_{ref}^{RE}$ may be determined by using a higher layer parameter.

As shown in FIG. 18, for offset $k_{ref}^{RE}$ of a PUSCH PTRS, eight DMRS ports (0 to 7) may be associated with DMRS configuration enhanced type 1 / enhanced type 2. For each type, four columns of offset (offset00, 01, 10, and 11) may be defined. Any value can be defined for an offset corresponding to each DMRS port and each DMRS configuration type. In the new table, the number of rows (number of ports) / number of columns (offsets) are not limited to this. A different number of rows / number of columns may be defined.

For example, for a PUSCH/PDSCH, in a case where Rel-15 (existing) DMRS configuration type 1 is configured/indicated, DMRS mapping may be controlled (determined) by using an existing table (FIG. 10/FIG. 11). In contrast, in a case where Rel-18 (new) DMRS configuration enhanced type 1 / enhanced type 2 is configured/indicated, DMRS mapping may be controlled (determined) by using a new table (FIG. 18). In other words, separate tables may be defined for an existing DMRS and new DMRS, and a table to be applied may differ depending on a configured/indicated type.

In FIG. 18, although enhanced type 1 and enhanced type 2 are defined in one table, the embodiment is not limited to this. Separate tables may be defined for enhanced type 1 and enhanced type 2.

As described above, the UE may determine, based on the existing table (FIG. 10/FIG. 11), offset $k_{ref}^{RE}$ for a PTRS corresponding to type 1/type 2 and determine, based on the new table (for example, FIG. 18), offset $k_{ref}^{RE}$ for a PTRS corresponding to enhanced type 1 / enhanced type 2.

An existing parameter "resourceElementOffset" related to offset $k_{ref}^{RE}$ described above may be configured by using a higher layer parameter such as "PTRS-UplinkConfig" (this is not restrictive. "PTRS-DownlinkConfig" may be used, for example). The UE may determine, by reusing an existing higher layer parameter, offset $k_{ref}^{RE}$ for a PTRS corresponding to enhanced type 1 / enhanced type 2. For example, in a case where "resourceElementOffset" described above is not configured, a column corresponding to "offset00" in the existing table may be used.

In order to determine offset $k_{ref}^{RE}$ for a PTRS corresponding to enhanced type 1 / enhanced type 2, new higher layer signaling (for example, PTRS-UplinkConfig_r18 or DMRS-UplinkConfig_r18, DMRS-DownlinkConfig_r18) may be defined. "resourceElementOffset" may be configured by using such new higher layer signaling. The UE may determine, by using a new higher layer parameter, offset $k_{ref}^{RE}$ for a PTRS corresponding to enhanced type 1 / enhanced type 2.

For example, for "resourceElementOffset" configured by using the new higher layer parameter described above, with no existing higher layer parameter "PTRS-UplinkConfig" configured, an offset value corresponding to enhanced type 1 / enhanced type 2 defined in the new table described above may be used.

In contrast, in a case where the existing higher layer parameter "PTRS-UplinkConfig" is configured, with no new higher layer parameter configured, an offset value corresponding to such "PTRS-UplinkConfig" (i.e., offset value corresponding to the existing table) may be used.

In a case where neither the existing higher layer parameter nor the new higher layer parameter is configured, an offset value corresponding to "offset00" in the existing table / new table may be used. In this case, the number of columns for offset values corresponding to enhanced type 1 / enhanced type 2 in the new table may be other than four.

According to the first embodiment, a UE is possible to appropriately judge an offset for a PTRS and map the PTRS, even when DMRS ports are extended.

{Embodiment 1-1}

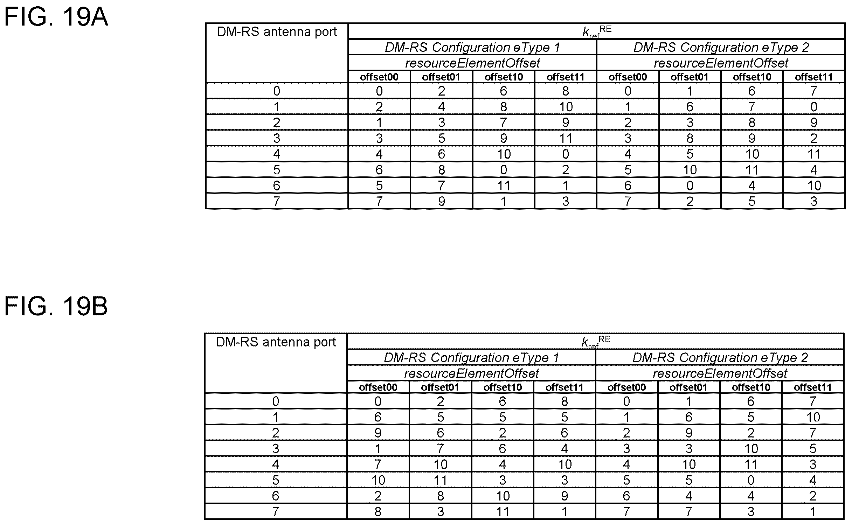

Embodiment 1-1 describes a variation of the new table (contents of the new table). FIGS. 19A and 19B are each a diagram to show an example of the new table used for determination of an offset of a subcarrier for a PUSCH PTRS, according to Embodiment 1-1.

For example, the new table for a PUSCH PTRS and the new table for a PDSCH PTRS may be defined with the same contents (offsets). Using the same contents between UL/DL enables implementation for a UE/gNB to be made easier.

The new table for a PUSCH PTRS and the new table for a PDSCH PTRS may be defined with the same contents (offsets). Using different contents between UL/DL enables more flexible configuration, allowing performance enhancement to be expected.

For example, the new table as shown in FIGS. 19A and 19B may be defined. In FIG. 19A, entries corresponding to DMRS ports 0 to 3 for enhanced type 1 may be the same as that in an existing table (for example, FIG. 10). Entries corresponding to DMRS ports 4 to 7 for enhanced type 1 may be defined with new values.

In FIG. 19A, entries corresponding to DMRS ports 0 to 5 for enhanced type 2 may be the same as that in an existing table (for example, FIG. 10). Entries corresponding to DMRS ports 6 to 7 for enhanced type 2 may be defined with new values.

In FIG. 19B, for either enhanced type 1 / enhanced type 2, new values (any values) may be defined, irrespective of any existing table.

Note that, in both FIGS. 19A and 19B, it is preferable that entries corresponding to the same column (offset00, 01, 10, or 11) have no duplication, in other words, the respective values be defined all different. For the same column, entries indicated with consecutive values may be included.

For example, the column of "offset00" may include "0 to 7" and the column of "offset10" may include "4 to 11." As described above, different values defined in the same column enables up to 8 layers to be indicated.

{Option 1-1-1}

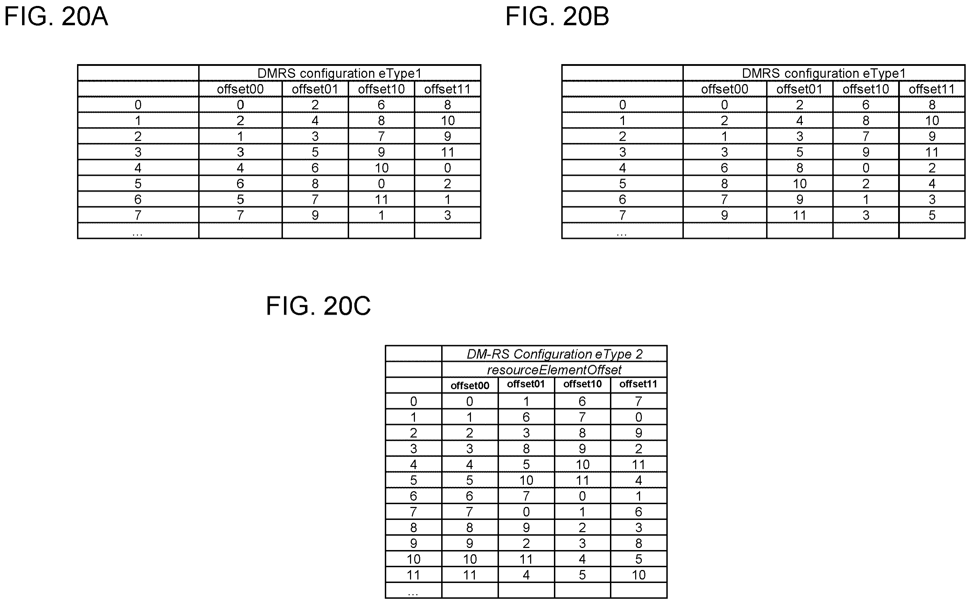

With reference to FIG. 20, a variation is described. FIGS. 20A to 20C are each a diagram to show a new table used for determination of an offset of a subcarrier for a PUSCH PTRS, according to a variation of Embodiment 1-1. FIG. 20A is a diagram to show an example of a new table corresponding to enhanced type 1. FIG. 20B is a diagram to show an example of a new table corresponding to enhanced type 1. FIG. 20C is a diagram to show an example of a new table corresponding to enhanced type 2.

As shown in FIGS. 20A to 20C, not limited to DMRS ports 0 to 7, new DMRS ports may be added. In FIG. 20A, entries corresponding to DMRS ports 0 to 3 may be the same as that in an existing table (for example, the left half of FIG. 10). In FIG. 20A, entries in a given column corresponding to DMRS ports 4 to 7 may be the same as entries in another column corresponding to DMRS ports 0 to 3.

More specifically, in FIG. 20A, entries {6, 8, 7, 9} in the column of "offset01" corresponding to DMRS ports 4 to 7 may be the same as entries {6, 8, 7, 9} in the column of "offset10" corresponding to DMRS ports 0 to 3. Similarly, entries {0, 2, 1, 3} in the column of "offset11" corresponding to DMRS ports 4 to 7 may be the same as entries {0, 2, 1, 3} in the column of "offset00" corresponding to DMRS ports 0 to 3.

In FIG. 20B, entries corresponding to DMRS ports 0 to 3 may be the same as that in an existing table (for example, the left half of FIG. 10). In FIG. 20B, entries in a given column corresponding to DMRS ports 4 to 7 may be the same as entries in another column corresponding to DMRS ports 0 to 3.

More specifically, in FIG. 20B, entries {6, 8, 7, 9} in the column of "offset00" corresponding to DMRS ports 4 to 7 may be the same as entries {6, 8, 7, 9} in the column of "offset10" corresponding to DMRS ports 0 to 3. Similarly, entries {0, 2, 1, 3} in the column of "offset10" corresponding to DMRS ports 4 to 7 may be the same as entries {0, 2, 1, 3} in the column of "offset00" corresponding to DMRS ports 0 to 3.

In FIG. 20C, entries corresponding to DMRS ports 0 to 5 may be the same as that in an existing table (for example, the right half of FIG. 10). In FIG. 20C, entries in a given column corresponding to DMRS ports 6 to 11 may be the same as entries in another column corresponding to DMRS ports 0 to 5.

More specifically, in FIG. 20C, entries {6, 8, 7, 9, 10, 11} in the column of "offset00" corresponding to DMRS ports 6 to 11 may be the same as entries {6, 8, 7, 9, 10, 11} in the column of "offset10" corresponding to DMRS ports 0 to 5. Similarly, entries {0, 1, 2, 3, 4, 5} in the column of "offset10" corresponding to DMRS ports 6 to 11 may be the same as entries {0, 1, 2, 3, 4, 5} in the column of "offset00" corresponding to DMRS ports 0 to 5.

{Option 1-1-2}

Alternatively, not limited to the example in FIG. 20, entries in the new table (DMRS ports and offset values) may be defined as below.

For example, for type 1 (enhanced type 1), offset values corresponding to DMRS ports 4/5/8/9/12/13 may be selected from predefined six values {0, 2, 4, 6, 8, 10} (in other words, even numbers).

For type 1 (enhanced type 1), offset values corresponding to DMRS ports 6/7/10/11/14/15 may be selected from predefined six values {1, 3, 5, 7, 9, 11} (in other words, odd numbers).

For example, for type 2 (enhanced type 2), offset values corresponding to DMRS ports 6/7/12/13/18/19 may be selected from predefined four values {0, 1, 6, 7}.

For type 2 (enhanced type 2), offset values corresponding to DMRS ports 8/9/14/15/20/21 may be selected from predefined four values {2, 3, 8, 9}.

For type 2 (enhanced type 2), offset values corresponding to DMRS ports 10/11/16/17/22/23 may be selected from predefined four values {2, 3, 8, 9}.

According to Embodiment 1-1, a UE is possible to appropriately judge an offset for a PTRS and map the PTRS, even when DMRS ports are extended.

EP 4 645 784 A1

{Embodiment 1-2}

Embodiment 1-2 describes a further variation of the new table (contents of the new table).

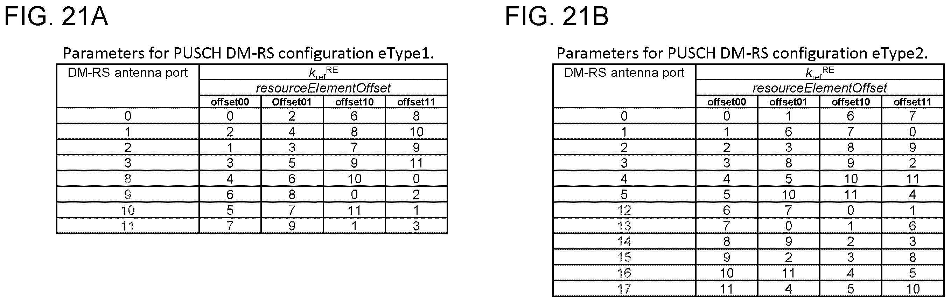

FIGS. 21A and 21B are each a diagram to show an example of a new table used for determination of an offset of a subcarrier for a PUSCH PTRS, according to Embodiment 1-2. Specifically, FIG. 21A shows parameters for enhanced type 1 and FIG. 21B shows parameters for enhanced type 2.

As shown in FIG. 21A, for enhanced type 1, eight DMRS ports (0, 1, 2, 3, 8, 9, 10, and 11) may be defined. In FIG. 21A, entries corresponding to DMRS ports 0 to 3 may be the same as that in an existing table (for example, the left half of FIG. 10). A PTRS associated with the DMRS ports (ports #0, 1, 8, and 9) may be mapped to a subcarrier (any one of 0, 2, 4, 6, 8, and 10). In other words, offset values (entries) corresponding to the DMRS ports (ports #0, 1, 8, and 9) may each be any one of 0, 2, 4, 6, 8, and 10. A PTRS associated with the DMRS ports (ports #0, 1, 8, and 9) may be mapped in an order of subcarrier (for example, increasing order of 0, 2, 4, 6, 8, and 10).

For example, focusing on the DMRS ports (ports #0 and 1) in FIG. 21A, offset values (offset00, 01, 10, and 11) corresponding to the DMRS ports are preferable to correspond to (0, 2), (2, 4), (6, 8), and (8, 10), respectively. The embodiment is not limited to this. Offset values (offset00, 01, 10, and 11) corresponding to the DMRS ports (ports #0 and 1) may correspond to (0, 2), (4, 6), (6, 8), and (8, 10) or to (0, 2), (2, 4), (4, 6), and (8, 10), respectively.

As shown in FIG. 21B, for enhanced type 2, twelve DMRS ports (0, 1, 2, 3, 4, 5, 12, 13, 14, 15, 16, and 17) may be defined. In FIG. 21B, entries corresponding to DMRS ports 0 to 5 may be the same as that in an existing table (for example, the right half of FIG. 10). A PTRS associated with the DMRS ports (ports #0, 1, 12, and 13) may be mapped to a subcarrier (0, 1, 6, 7). In other words, offset values (entries) corresponding to the DMRS ports (ports #0, 1, 12, and 13) may each be any one of 0, 1, 6, and 7. A PTRS associated with the DMRS ports (ports #0, 1, 12, and 13) may be mapped in an order of subcarrier (for example, increasing order of 0, 1, 6, and 7).

Similarly, in FIG. 21B, a PTRS associated with the DMRS ports (ports #2, 3, 14, and 15) may be mapped to a subcarrier (2, 3, 8, 9). In other words, offset values (entries) corresponding to the DMRS ports (ports #2, 3, 14, and 15) may each be any one of 2, 3, 8, and 9. A PTRS associated with the DMRS ports (ports #2, 3, 14, and 15) may be mapped in an order of subcarrier (for example, increasing order of 2, 3, 8, and 9).

Similarly, in FIG. 21B, a PTRS associated with the DMRS ports (ports #4, 5, 16, and 17) may be mapped to a subcarrier (4, 5, 10, 11). In other words, offset values (entries) corresponding to the DMRS ports (ports #4, 5, 16, and 17) may each be any one of 4, 5, 10, and 11. A PTRS associated with the DMRS ports (ports #4, 5, 16, and 17) may be mapped in an order of subcarrier (for example, increasing order of 4, 5, 10, and 11).

For example, focusing on the DMRS ports (ports #0 and 1) in FIG. 21B, offset values (offset00, 01, 10, and 11) corresponding to the DMRS ports are preferable to correspond to (0, 1), (1, 6), (6, 7), and (7, 0), respectively. Focusing on the DMRS ports (ports #2 and 3) in FIG. 21B, offset values (offset00, 01, 10, and 11) corresponding to the DMRS ports may correspond to (2, 3), (3, 8), (8, 9), and (9, 2), respectively. Furthermore, focusing on the DMRS ports (ports #4 and 5) in FIG. 21B, offset values (offset00, 01, 10, and 11) corresponding to the DMRS ports may correspond to (4, 5), (5, 10), (10, 11), and (11, 4), respectively.

{Variation of Embodiment 1-2}

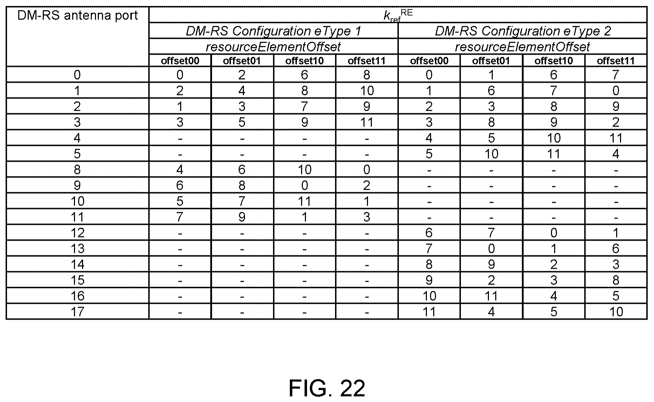

FIG. 22 is a diagram to show a new table used for determination of an offset of a subcarrier for a PUSCH PTRS, according to a variation of Embodiment 1-2. As shown in FIG. 22, the new table (for example, FIG. 21A) for enhanced type 1 and the new table (for example, FIG. 21B) for enhanced type 2 may be defined integrated in one table. In this case, the integrated new table may include blank parts for offset values.

For example, in enhanced-type-1 DMRS ports (#8 and #9), for the offset values, any value may be selected from six values {0, 2, 4, 6, 8, 10}. In enhanced-type-1 DMRS ports (#10 and #11), for the offset values, any value may be selected from six values {1, 3, 5, 7, 9, 11}.

In enhanced-type-2 DMRS ports (#12 and #13), for the offset values, any value may be selected from four values {0, 1, 6, 7}. In enhanced-type-2 DMRS ports (#14 and #15), for the offset values, any value may be selected from four values {2, 3, 8, 9}. In enhanced-type-2 DMRS ports (#16 and #17), for the offset values, any value may be selected from four values {4, 5, 10, 11}.

According to Embodiment 1-2, a UE is possible to appropriately judge an offset for a PTRS and map the PTRS, even when DMRS ports are extended.

{Embodiment 1-3}

Embodiment 1-3 describes a further variation of the new table (contents of the new table).

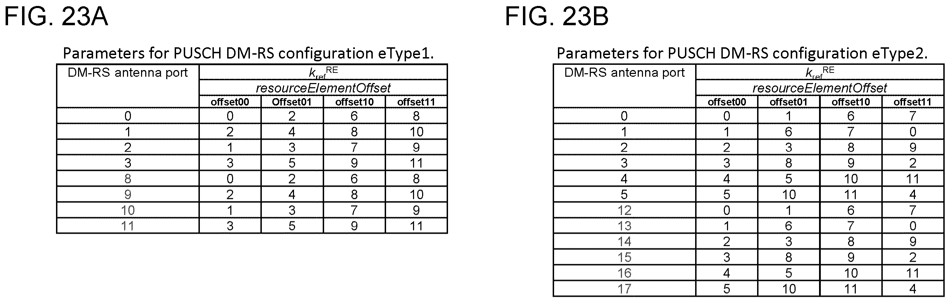

FIGS. 23A and 23B are each a diagram to show an example of a new table used for determination of an offset of a subcarrier for a PUSCH PTRS, according to Embodiment 1-3. Specifically, FIG. 23A shows parameters for enhanced type

18

1 and FIG. 23B shows parameters for enhanced type 2.

As shown in FIG. 23A, for enhanced type 1, eight DMRS ports (0, 1, 2, 3, 8, 9, 10, and 11) may be defined. In FIG. 23A, entries corresponding to DMRS ports 0 to 3 and entries corresponding to DMRS ports 8 to 11 may be the same as that in an existing table (for example, the left half of FIG. 10). In other words, the entries corresponding to DMRS ports 8 to 11 may be the same as the entries corresponding to DMRS ports 0 to 3, that is a repetition of the entries corresponding to DMRS ports 0 to 3.

As shown in FIG. 23B, for enhanced type 2, twelve DMRS ports (0, 1, 2, 3, 4, 5, 12, 13, 14, 15, 16, and 17) may be defined. In FIG. 23B, entries corresponding to DMRS ports 0 to 5 and entries corresponding to DMRS ports 12 to 17 may be the same as that in an existing table (for example, the right half of FIG. 10). In other words, the entries corresponding to DMRS ports 12 to 17 may be the same as the entries corresponding to DMRS ports 0 to 5, that is a repetition of the entries corresponding to DMRS ports 0 to 5.

{Variation of Embodiment 1-3}

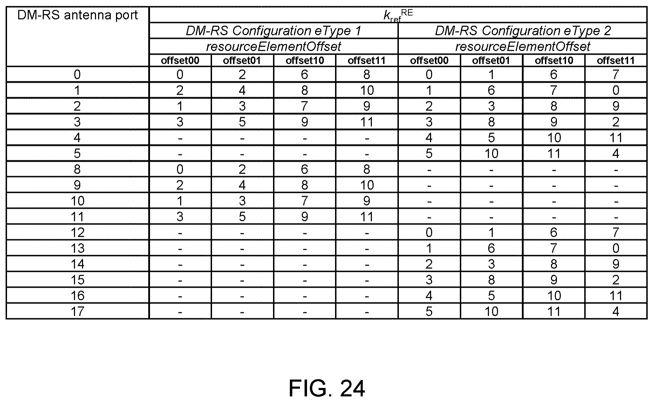

FIG. 24 is a diagram to show a new table used for determination of an offset of a subcarrier for a PUSCH PTRS, according to a variation of Embodiment 1-3. As shown in FIG. 24, the new table (for example, FIG. 23A) for enhanced type 1 and the new table (for example, FIG. 23B) for enhanced type 2 may be defined integrated in one table. In this case, the integrated new table may include blank parts for offset values.

{Another Variation of Embodiment 1-3}

For example, in a case of Cyclic Prefix OFDM (CP-OFDM), in one physical resource block (Physical RB (PRB)), the following rule may be employed.

- For DMRS type 1, if one PTRS port is associated with DMRS port #0/#1, the one PTRS port is to be mapped to a subcarrier {(n + 0) mod 12 or (n + 2) mod 12}.
- For DMRS type 1, if one PTRS port is associated with DMRS port #2/#3, the one PTRS port is to be mapped to a subcarrier {(n + 1) mod 12 or (n + 3) mod 12}.
- For DMRS type 2, if one PTRS port is associated with DMRS port #0/#1, the one PTRS port is to be mapped to a subcarrier {(n + 0) mod 12 or (n + 1) mod 12}.
- For DMRS type 2, if one PTRS port is associated with DMRS port #2/#3, the one PTRS port is to be mapped to a subcarrier {(n + 2) mod 12 or (n + 3) mod 12}.
- For DMRS type 2, if one PTRS port is associated with DMRS port #4/#5, the one PTRS port is to be mapped to a subcarrier {(n + 4) mod 12 or (n + 5) mod 12}.

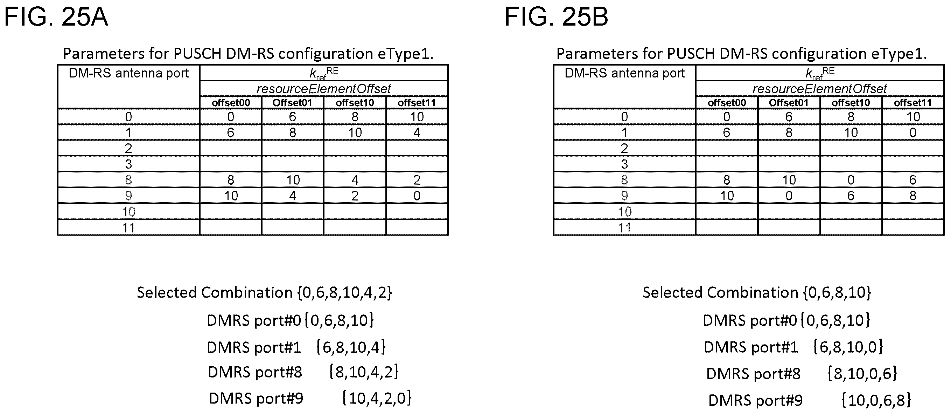

FIGS. 25A and 25B are each a diagram to show a new table used for determination of an offset of a subcarrier for a PUSCH PTRS, according to another variation of Embodiment 1-3.

For example, in CDM group #0 of enhanced type 1, permutation of entries {0, 2, 4, 6, 8, 10} in a new table has 6P6 = 720 combinations. For entries in the new table, out of 720 combinations, any combination is applicable. The combination may be selected based on a predetermined rule / configuration by a higher layer / MAC CE / indication by DCI or the like.

For example, as shown in FIG. 25A, for entries corresponding to DMRS port #0, four from among a selected combination may be selected. For example, in a case where the selected combination has "0, 6, 8, 10, 4, 2," four values (for example, 0, 6, 8, and 10) may be selected from among the selected combination. Regarding which value to select, what to select may be determined based on a predetermined rule / configuration by a higher layer / MAC CE / indication by DCI or the like.

For entries corresponding to DMRS port #1, four from among a selected combination may be selected. For example, in a case where the selected combination has "0, 6, 8, 10, 4, 2," four values may be selected from among the selected combination. For example, four values (for example, 6, 8, 10, 4) may be selected as the entries corresponding to DMRS port #1, the four values obtained by shifting by one index with respect to the entries corresponding to DMRS port #0.

For entries corresponding to DMRS port #8, four from among a selected combination may be selected. For example, in a case where the selected combination has "0, 6, 8, 10, 4, 2," four values may be selected from among the selected combination. For example, four values (for example, 8, 10, 4, 2) may be selected as the entries corresponding to DMRS port #8, the four values obtained by shifting by one index with respect to the entries corresponding to DMRS port #1.

For entries corresponding to DMRS port #9, four from among a selected combination may be selected. For example, in a case where the selected combination has "0, 6, 8, 10, 4, 2," four values may be selected from among the selected combination. For example, four values (for example, 10, 4, 2, 0) may be selected as the entries corresponding to DMRS port #9, the four values obtained by shifting by one index with respect to the entries corresponding to DMRS port #8.

Note that the number of indices (which may be referred to as the number of shifts) for the shifting described above may be determined based on a predetermined rule / configuration by a higher layer / MAC CE / indication by DCI or the like. Such rules are applicable not only to another CDM group of enhanced type 1 but also to any CDM group of enhanced type 2. For example, in CDM group #1 of enhanced type 1, permutation of entries {1, 3, 5, 7, 9, 11} in a new table has 6P6 = 720 combinations.

In CDM group #0 of enhanced type 2, permutation of entries {0, 1, 6, 7} in a new table has 4P4 = 24 combinations. In CDM group #1 of enhanced type 2, permutation of entries {2, 3, 8, 9} in a new table has 4P4 = 24 combinations. In CDM group #2 of enhanced type 2, permutation of entries {4, 5, 10.11} in a new table has 4P4 = 24 combinations.

As shown in FIG. 25B, for entries corresponding to DMRS port #0, four from among a selected combination may be selected. For example, in a case where the selected combination has "0, 6, 8, 10," four values (for example, 0, 6, 8, and 10) may be selected from among the selected combination. Regarding which value to select, what to select may be determined based on a predetermined rule / configuration by a higher layer / MAC CE / indication by DCI or the like.

For entries corresponding to DMRS port #1, four from among a selected combination may be selected. For example, in a case where the selected combination has "0, 6, 8, 10," four values may be selected from among the selected combination. For example, four values (for example, 6, 8, 10, 0) may be selected as the entries corresponding to DMRS port #1, the four values obtained by shifting by one index with respect to the entries corresponding to DMRS port #0.

For entries corresponding to DMRS port #8, four from among a selected combination may be selected. For example, in a case where the selected combination has "0, 6, 8, 10," four values may be selected from among the selected combination. For example, four values (for example, 8, 10, 0, 6) may be selected as the entries corresponding to DMRS port #8, the four values obtained by shifting by one index with respect to the entries corresponding to DMRS port #1.

For entries corresponding to DMRS port #9, four from among a selected combination may be selected. For example, in a case where the selected combination has "0, 6, 8, 10," four values may be selected from among the selected combination. For example, four values (for example, 10, 0, 6, 8) may be selected as the entries corresponding to DMRS port #9, the four values obtained by shifting by one index with respect to the entries corresponding to DMRS port #8.

Note that the number of indices (which may be referred to as the number of shifts) for the shifting described above may be determined based on a predetermined rule / configuration by a higher layer / MAC CE / indication by DCI or the like. Such rules are applicable not only to another CDM group of enhanced type 1 but also to any CDM group of enhanced type 2. Specifically, this is the same as the example described above.

According to Embodiment 1-3, a UE is possible to appropriately judge an offset for a PTRS and map the PTRS, even when DMRS ports are extended.

{Variation}

In the present disclosure, mapping of a PTRS associated with a double-symbol DMRS port may be made the same as mapping of a PTRS associated with a single-symbol DMRS port.

In the present disclosure, in a case of type 1 / enhanced type 1, a PTRS corresponding to DMRS ports #4, 5, 6, and 7 may be the same as that corresponding to DMRS ports #0, 1, 2, and 3. A PTRS corresponding to DMRS ports #12, 13, 14, and 15 may be the same as that corresponding to enhanced-type-1 DMRS ports #8, 9, 10, and 11. A PTRS corresponding to DMRS ports #6, 7, 8, 9, 10, and 11 may be the same as that corresponding to type-2/enhanced-type-2 DMRS ports # 0, 1, 2, 3, 4, and 5. A PTRS corresponding to DMRS ports #18, 19, 20, 21, 22, and 23 may be the same as that corresponding to enhanced-type-2 DMRS ports # 12, 13, 14, 15, 16, and 17.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- supporting of specific processing/operation/control/information for at least one of the above-described embodiments
- supporting of a PUSCH with more than 4 ranks
- supporting of an Rel-15/16/17 DMRS port / Rel-18 DMRS port
- supporting of more than one (or two) PTRS ports with respect to a PUSCH with more than 4 ranks
- supporting of PTRS-DMRS association indication in DCI (for example, DCI format 0_1/0_2)
- supporting of the number of DMRS ports more than that of any existing specification, with respect to a PDSCH/PUSCH
- supporting of the number of DMRS ports more than that of any existing specification, by using a TD-OCC/FD-OCC/FDM, with respect to a DMRS for a PDSCH/PUSCH
- supporting of an FD OCC having a length of 4/6
- the maximum number of DMRS ports / PTRS ports for a PUSCH with more than 4 ranks

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. Examples of the specific information may include information indicating enabling of switching between a single TRP and multi-TRP in a case of using a unified TCI state and include any RRC parameter for a specific release (for example, Rel. 18/19).

When the UE does not support at least one of the specific UE capabilities above or is not configured with the specific information, operation of Rel. 15/16/17 may be applied, for example.

(Supplementary Note)

Regarding one embodiment of the present disclosure, the following supplementary notes of the invention will be given.

{Supplementary Note 1}

A terminal including:

a receiving section that receives information indicating association between a demodulation reference signal (DMRS) port for a shared channel and a parameter for an orthogonal cover code (OCC); and
a control section that controls, based on the information, mapping of the DMRS, wherein
the information includes a parameter indicating an enhanced-type DMRS port corresponding to a frequency domain (FD)-OCC having a length of 4.

{Supplementary Note 2}

The terminal according to supplementary note 1, wherein the information includes first information and second information that are defined separately, the first information including a parameter indicating a DMRS port corresponding to a frequency domain (FD)-OCC having a length of 2, the second information including the parameter indicating the enhanced-type DMRS port.

{Supplementary Note 3}

The terminal according to supplementary note 1, wherein the information includes a parameter indicating a DMRS port corresponding to a frequency domain (FD)-OCC having a length of 2 and the parameter indicating the enhanced-type DMRS port that are defined in common.

{Supplementary Note 4}

The terminal according to any one of supplementary notes 1 to 3, wherein the control section controls, based on other information indicating association between a demodulation reference signal (DMRS) port for a shared channel and a phase tracking reference signal (PTRS) for the shared channel, mapping of the PTRS.

(Supplementary Note)

Regarding one embodiment of the present disclosure, the following supplementary notes of the invention will be given.

{Supplementary Note 1}

A terminal including:

a receiving section that receives information indicating association between a demodulation reference signal (DMRS) port for a shared channel and a phase tracking reference signal (PTRS) for the shared channel; and
a control section that controls, based on the information, mapping of the PTRS, wherein
the information includes a parameter indicating an offset corresponding to an enhanced-type DMRS port.

{Supplementary Note 2}

The terminal according to supplementary note 1, wherein the offset is defined to have a different value for each DMRS port.

{Supplementary Note 3}

The terminal according to supplementary note 1 or 2, wherein the information includes a parameter indicating an offset for an enhanced-type-1 DMRS port and a parameter indicating an offset for an enhanced-type-2 DMRS port.

{Supplementary Note 4}

The terminal according to any one of supplementary notes 1 to 3, wherein the parameter indicating the offset corresponding to the enhanced-type DMRS port is selected from a combination of subcarriers corresponding to a given code division multiplexing (CDM) group.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

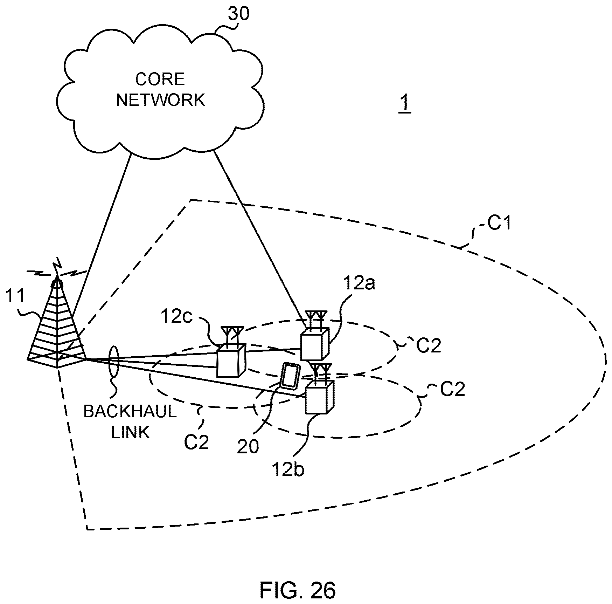

FIG. 26 is a diagram to show an example of a schematic structure of the radio communication system according to one embodiment. The radio communication system 1 (which may be referred to simply as system 1) may be a system implementing communication using Long Term Evolution (LTE), 5th generation mobile communication system New Radio (5G NR), or the like the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), ApplicationFunction (AF), Data Network (DN), Location Management Function (LMF), and a maintenance operation management (Operation, Administration and Maintenance (Management) (OAM)), for example. Note that one network node may provide a plurality of functions. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

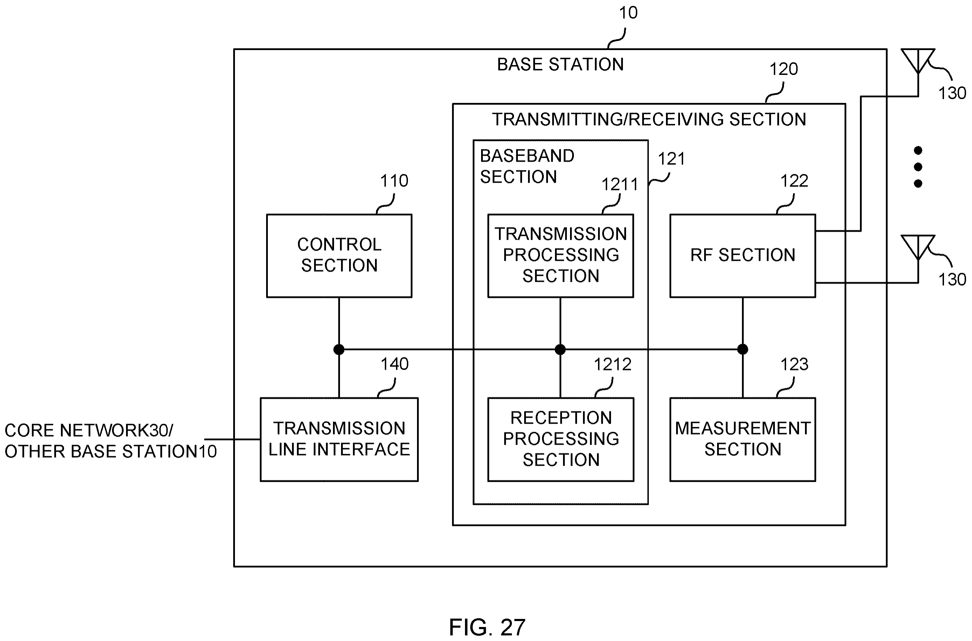

FIG. 27 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30, another base station 10, or the like, for acquisition, transmission, or the like of user data (user plane data), control plane data, or the like for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information indicating association between a demodulation reference signal (DMRS) port for a shared channel and a parameter for an orthogonal cover code (OCC). The transmitting/receiving section 120 may transmit information indicating association between a demodulation reference signal (DMRS) port for a shared channel and a phase tracking reference signal (PTRS) for the shared channel.

The control section 110 may control, based on the information, mapping of the DMRS. The information may include a parameter indicating an enhanced-type DMRS port corresponding to a frequency domain (FD)-OCC having a length of 4. The information may include first information and second information that are defined separately, the first information including a parameter indicating a DMRS port corresponding to a frequency domain (FD)-OCC having a length of 2, the second information including the parameter indicating the enhanced-type DMRS port. The information may include a parameter indicating a DMRS port corresponding to a frequency domain (FD)-OCC having a length of 2 and the parameter indicating the enhanced-type DMRS port that are defined in common. The control section 110 may control, based on the information, mapping of the PTRS. The information may include a parameter indicating an offset corresponding to an enhanced-type DMRS port. The offset may be defined to have a different value for each DMRS port. The information may include a parameter indicating an offset for an enhanced-type-1 DMRS port and a parameter indicating an offset for an enhanced-type-2 DMRS port. The parameter indicating the offset corresponding to the enhanced-type DMRS port may be selected from a combination of subcarriers corresponding to a given code division multiplexing (CDM) group.

(User Terminal)

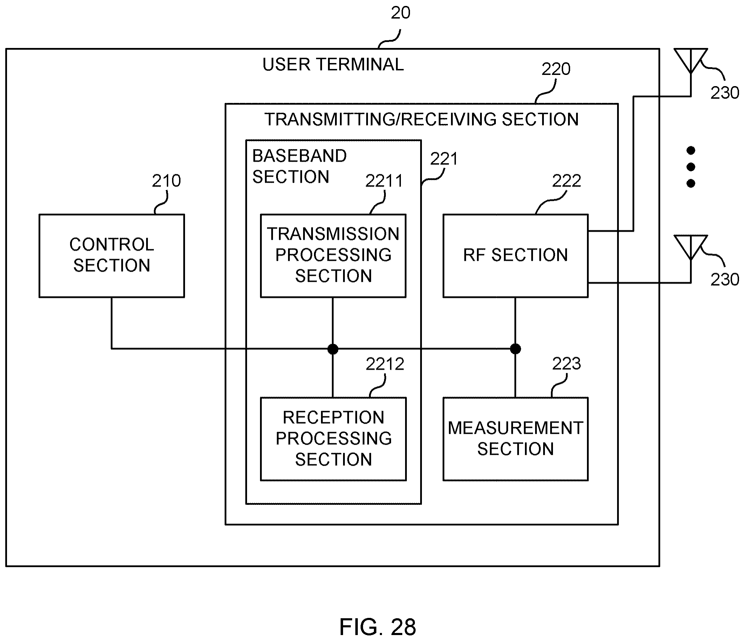

FIG. 28 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information indicating association between a demodulation reference signal (DMRS) port for a shared channel and a parameter for an orthogonal cover code (OCC). The transmitting/receiving section 220 may receive information indicating association between a demodulation reference signal (DMRS) port for a shared channel and a phase tracking reference signal (PTRS) for the shared channel.

The control section 210 may control, based on the information, mapping of the DMRS. The information may include a parameter indicating an enhanced-type DMRS port corresponding to a frequency domain (FD)-OCC having a length of 4. The information may include first information and second information that are defined separately, the first information including a parameter indicating a DMRS port corresponding to a frequency domain (FD)-OCC having a length of 2, the second information including the parameter indicating the enhanced-type DMRS port. The information may include a parameter indicating a DMRS port corresponding to a frequency domain (FD)-OCC having a length of 2 and the parameter indicating the enhanced-type DMRS port that are defined in common. The control section 210 may control, based on the information, mapping of the PTRS. The information may include a parameter indicating an offset corresponding to an enhanced-type DMRS port. The offset may be defined to have a different value for each DMRS port. The information may include a parameter indicating an offset for an enhanced-type-1 DMRS port and a parameter indicating an offset for an enhanced-type-2 DMRS port. The parameter indicating the offset corresponding to the enhanced-type DMRS port may be selected from a combination of subcarriers corresponding to a given code division multiplexing (CDM) group.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

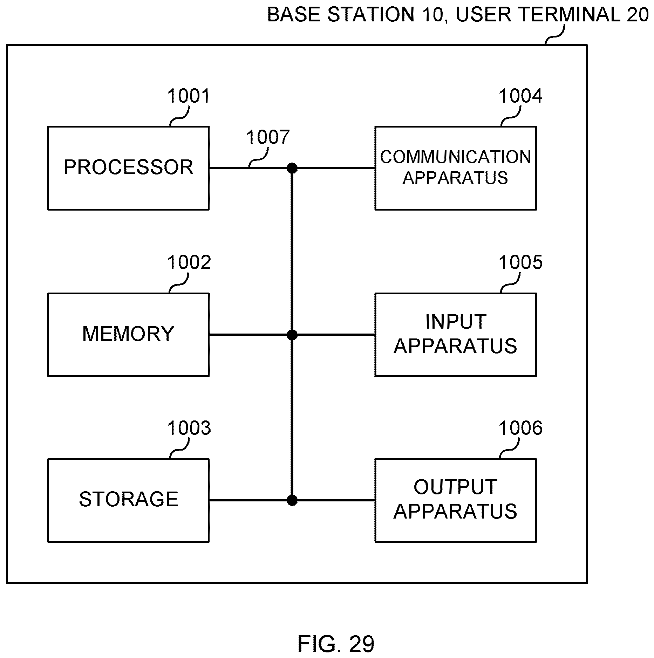

For example, a base station, a user terminal, and so on according to one embodiment of the present disclosure may function as a computer that executes the processes of the radio communication method of the present disclosure. FIG. 29 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names assigned to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

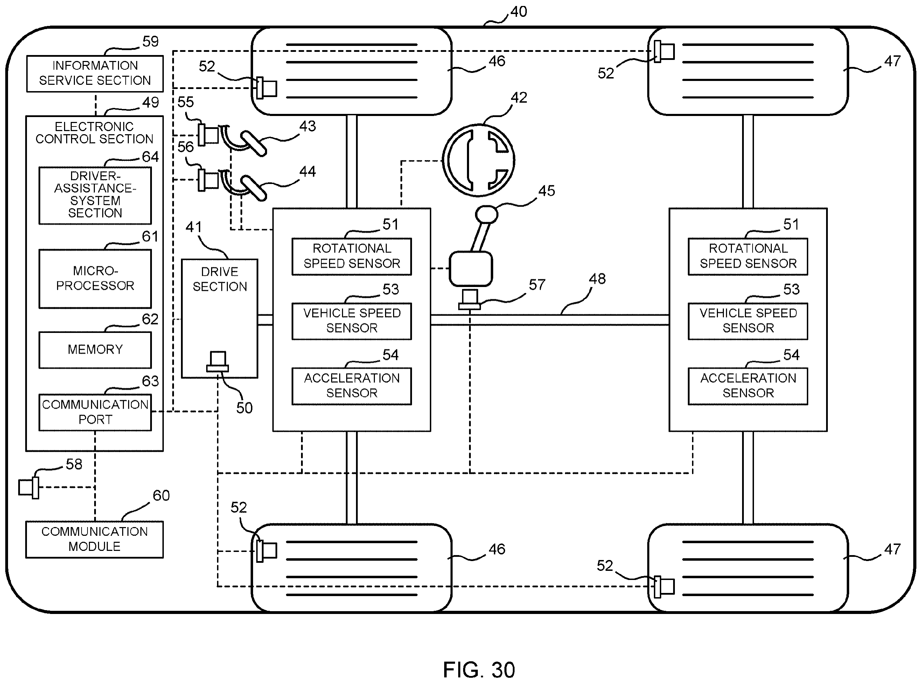

FIG. 30 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various information such as driving information, traffic information, and entertainment information, such as a car navigation system, an audio system, a speaker, a display, a television, and a radio; and one or more ECUs that control these devices. The information service section 59 provides various information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various information received from the external apparatus in the memory 62 that can be used by the microprocessor 61. Based on the information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

**Claims**

1.  A terminal comprising:

    a receiving section that receives information indicating association between a demodulation reference signal (DMRS) port for a shared channel and a parameter for an orthogonal cover code (OCC); and
    a control section that controls, based on the information, mapping of the DMRS, wherein
    the information includes a parameter indicating an enhanced-type DMRS port corresponding to a frequency domain (FD)-OCC having a length of 4.

2.  The terminal according to claim 1, wherein
    the information includes first information and second information that are defined separately, the first information including a parameter indicating a DMRS port corresponding to a frequency domain (FD)-OCC having a length of 2, the second information including the parameter indicating the enhanced-type DMRS port.

3.  The terminal according to claim 1, wherein
    the information includes a parameter indicating a DMRS port corresponding to a frequency domain (FD)-OCC having a length of 2 and the parameter indicating the enhanced-type DMRS port that are defined in common.

4.  The terminal according to claim 1, wherein
    the control section controls, based on other information indicating association between a demodulation reference signal (DMRS) port for a shared channel and a phase tracking reference signal (PTRS) for the shared channel, mapping of the PTRS.

5.  A radio communication method for a terminal, the radio communication method comprising:

    receiving information indicating association between a demodulation reference signal (DMRS) port for a shared channel and a parameter for an orthogonal cover code (OCC); and
    controlling, based on the information, mapping of the DMRS, wherein
    the information includes a parameter indicating an enhanced-type DMRS port corresponding to a frequency domain (FD)-OCC having a length of 4.

6.  A base station comprising:

    a transmitting section that transmits information indicating association between a demodulation reference signal (DMRS) port for a shared channel and a parameter for an orthogonal cover code (OCC); and
    a control section that controls, based on the information, mapping of the DMRS, wherein
    the information includes a parameter indicating an enhanced-type DMRS port corresponding to a frequency domain (FD)-OCC having a length of 4.

| TPMI INDEX | PRECODING MATRIX W (ordered from left to right in increasing order of TPMI index) | | | | | | | |
|---|---|---|---|---|---|---|---|---|
| 0 − 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 − 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 − 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 − 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

NON-COHERENT CODEBOOK

PARTIAL-COHERENT CODEBOOK

FULL-COHERENT CODEBOOK

FIG. 1

## Parameters for PDSCH DM-RS configuration type 1.

| $p$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

## Parameters for PDSCH DM-RS configuration type 2.

| $p$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

## FIG. 2

## Parameters for PUSCH DM-RS configuration type 1.

| $\widetilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

## Parameters for PUSCH DM-RS configuration type 2.

| $\widetilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

FIG. 3

# FIG. 4A

PTRS-DMRS association for UL PTRS port#0

| Value | DMRS Port |
|---|---|
| 0 | 1st scheduled DMRS port |
| 1 | 2nd scheduled DMRS port |
| 2 | 3rd scheduled DMRS port |
| 3 | 4th scheduled DMRS port |

# FIG. 4B

PTRS-DMRS association for UL PTRS port#0 and #1

| Value of MSB | DMRS Port | | Value of LSB | DMRS Port |
|---|---|---|---|---|
| 0 | 1st DMRS port which shares PTRS port#0 | | 0 | 1st DMRS port which shares PTRS port#1 |
| 1 | 2nd DMRS port which shares PTRS port#0 | | 1 | 2nd DMRS port which shares PTRS port#1 |

EP 4 645 784 A1

FIG. 5

PTRS-DMRS association for UL PTRS port#0 or for the actual UL PTRS port

| Value of MSB | DMRS Port | | Value of LSB | DMRS Port |
|---|---|---|---|---|
| 0 | 1st scheduled DMRS port corresponding to SRS resource indicator field and/or Precoding information and number of layers field | | 0 | 1st scheduled DMRS port corresponding to Second SRS resource indicator field and/or Second Precoding information field |
| 1 | 2nd scheduled DMRS port corresponding to SRS resource indicator field and/or Precoding information and number of layers field | | 1 | 2nd scheduled DMRS port corresponding to Second SRS resource indicator field and/or Second Precoding information field |

FIG. 6

EP 4 645 784 A1

## FIG. 7A

PTRS-DMRS association or Second PTRS-DMRS association for UL PTRS port#0

| Value | DMRS Port |
|-------|-----------|
| 0 | 1st scheduled DMRS port |
| 1 | 2nd scheduled DMRS port |
| 2 | 3rd scheduled DMRS port |
| 3 | 4th scheduled DMRS port |

## FIG. 7B

PTRS-DMRS association or Second PTRS-DMRS association for UL PTRS port#0 and #1

| Value of MSB | DMRS Port | | Value of LSB | DMRS Port |
|--------------|-----------|---|--------------|-----------|
| 0 | 1st DMRS port which shares PTRS port#0 | | 0 | 1st DMRS port which shares PTRS port#1 |
| 1 | 2nd DMRS port which shares PTRS port#0 | | 1 | 2nd DMRS port which shares PTRS port#1 |

EP 4 645 784 A1

# FIG. 8A

| FD-OCC index | Wf(0) | Wf(1) | Wf(2) | Wf(3) |
|:---:|:---:|:---:|:---:|:---:|
| 0 | +1 | +1 | +1 | +1 |
| 1 | +1 | -1 | +1 | -1 |
| 2 | +1 | +1 | -1 | -1 |
| 3 | +1 | -1 | -1 | +1 |

# FIG. 8B

| FD-OCC index | Wf(0) | Wf(1) | Wf(2) | Wf(3) |
|:---:|:---:|:---:|:---:|:---:|
| 0 | +1 | +1 | +1 | +1 |
| 1 | +1 | -1 | +1 | -1 |
| 2 | +1 | +j | -1 | -j |
| 3 | +1 | -j | -1 | +j |

# FIG. 8C

| TD-OCC index | Wt(0) | Wt(1) |
|:---:|:---:|:---:|
| 0 | +1 | +1 |
| 1 | +1 | -1 |

## FIG. 9A

eType 1 DMRS ports for PUSCH

| p | CDM group index | FD-OCC index | TD-OCC index |
|---|---|---|---|
| 0 | 0 | 0 | 0 |
| 1 | 0 | 1 | 0 |
| 2 | 1 | 0 | 0 |
| 3 | 1 | 1 | 0 |
| 4 | 0 | 0 | 1 |
| 5 | 0 | 1 | 1 |
| 6 | 1 | 0 | 1 |
| 7 | 1 | 1 | 1 |
| 8 | 0 | 2 | 0 |
| 9 | 0 | 3 | 0 |
| 10 | 1 | 2 | 0 |
| 11 | 1 | 3 | 0 |
| 12 | 0 | 2 | 1 |
| 13 | 0 | 3 | 1 |
| 14 | 1 | 2 | 1 |
| 15 | 1 | 3 | 1 |

## FIG. 9B

eType 2 DMRS ports for PUSCH

| p | CDM group index | FD-OCC index | TD-OCC index |
|---|---|---|---|
| 0 | 0 | 0 | 0 |
| 1 | 0 | 1 | 0 |
| 2 | 1 | 0 | 0 |
| 3 | 1 | 1 | 0 |
| 4 | 2 | 0 | 0 |
| 5 | 2 | 1 | 0 |
| 6 | 0 | 0 | 1 |
| 7 | 0 | 1 | 1 |
| 8 | 1 | 2 | 1 |
| 9 | 1 | 3 | 1 |
| 10 | 2 | 2 | 1 |
| 11 | 2 | 3 | 1 |
| 12 | 0 | 2 | 0 |
| 13 | 0 | 3 | 0 |
| 14 | 1 | 2 | 0 |
| 15 | 1 | 3 | 0 |
| 16 | 2 | 2 | 0 |
| 17 | 2 | 3 | 0 |
| 18 | 0 | 2 | 1 |
| 19 | 0 | 3 | 1 |
| 20 | 1 | 2 | 1 |
| 21 | 1 | 3 | 1 |
| 22 | 2 | 2 | 1 |
| 23 | 2 | 3 | 1 |

| DM-RS antenna port $\tilde{p}$ | $k_{\text{ref}}^{\text{RE}}$ | | | | | | | |
|---|---|---|---|---|---|---|---|---|
| | DM-RS Configuration type 1 | | | | DM-RS Configuration type 2 | | | |
| | resourceElementOffset | | | | resourceElementOffset | | | |
| | offset00 | offset01 | offset10 | offset11 | offset00 | offset01 | offset10 | offset11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | - | - | - | - | 4 | 5 | 10 | 11 |
| 5 | - | - | - | - | 5 | 10 | 11 | 4 |

FIG. 10

| DM-RS antenna port $p$ | $k_{\text{ref}}^{\text{RE}}$ | | | | | | | |
|---|---|---|---|---|---|---|---|---|
| | DM-RS Configuration type 1 | | | | DM-RS Configuration type 2 | | | |
| | *resourceElementOffset* | | | | *resourceElementOffset* | | | |
| | offset00 | offset01 | offset10 | offset11 | offset00 | offset01 | offset10 | offset11 |
| 1000 | 0 | 2 | 6 | 8 | 0 | 1 | 6 | 7 |
| 1001 | 2 | 4 | 8 | 10 | 1 | 6 | 7 | 0 |
| 1002 | 1 | 3 | 7 | 9 | 2 | 3 | 8 | 9 |
| 1003 | 3 | 5 | 9 | 11 | 3 | 8 | 9 | 2 |
| 1004 | - | - | - | - | 4 | 5 | 10 | 11 |
| 1005 | - | - | - | - | 5 | 10 | 11 | 4 |

FIG. 11

# FIG. 12A

Type 1

**CDM group#0**    **CDM group#1**

| port#0 | port#1 | port#2 | port#3 |
| FD-OCC#0 | FD-OCC#1 | FD-OCC#0 | FD-OCC#1 |

# FIG. 12B

eType 1

**CDM group#0**                    **CDM group#1**

| port#0 | port#1 | port#8 | port#9 | port#2 | port#3 | port#10 | port#11 |
| FD-OCC#0 | FD-OCC#1 | FD-OCC#2 | FD-OCC#3 | FD-OCC#0 | FD-OCC#1 | FD-OCC#2 | FD-OCC#3 |

EP 4 645 784 A1

## FIG. 13A

Type 2

**CDM group#0**   **CDM group#1**   **CDM group#2**

| port#0 | port#1 | port#2 | port#3 | port#4 | port#5 |
|--------|--------|--------|--------|--------|--------|
| ● | ● | ● | ● | ● | ● |

FD-OCC#0 FD-OCC#1 | FD-OCC#0 FD-OCC#1 | FD-OCC#0 FD-OCC#1

## FIG. 13B

eType 2

**CDM group#0**                      **CDM group#1**                                   **CDM group#2**

| port#0 | port#1 | port#12 | port#13 | port#2 | port#3 | port#14 | port#15 | port#4 | port#5 | port#16 | port#17 |
|--------|--------|---------|---------|--------|--------|---------|---------|--------|--------|---------|---------|
| ● | ● | ● | ● | ● | ● | ● | ● | ● | ● | ● | ● |

FD-OCC#0 FD-OCC#1 FD-OCC#2 FD-OCC#3 | FD-OCC#0 FD-OCC#1 FD-OCC#2 FD-OCC#3 | FD-OCC#0 FD-OCC#1 FD-OCC#2 FD-OCC#3

EP 4 645 784 A1

Parameters for PUSCH DM-RS configuration eType1.

| $p$ | CDM group $\lambda$ | $\Delta$ | $w_f(k')$ | | | | $w_t(l')$ | |
|---|---|---|---|---|---|---|---|---|
| | | | $k'=0$ | $k'=1$ | $k'=2$ | $k'=3$ | $l'=0$ | $l'=1$ |
| 0 | 0 | 0 | +1 | +1 | +1 | +1 | +1 | +1 |
| 1 | 0 | 0 | +1 | -1 | +1 | -1 | +1 | +1 |
| 2 | 1 | 1 | +1 | +1 | +1 | +1 | +1 | +1 |
| 3 | 1 | 1 | +1 | -1 | +1 | -1 | +1 | +1 |
| 4 | 0 | 0 | +1 | +1 | +1 | +1 | +1 | -1 |
| 5 | 0 | 0 | +1 | -1 | +1 | -1 | +1 | -1 |
| 6 | 1 | 1 | +1 | +1 | +1 | +1 | +1 | -1 |
| 7 | 1 | 1 | +1 | -1 | +1 | -1 | +1 | -1 |
| 8 | 0 | 0 | +1 | +j | -1 | -j | +1 | +1 |
| 9 | 0 | 0 | +1 | -j | -1 | +j | +1 | +1 |
| 10 | 1 | 1 | +1 | +j | -1 | -j | +1 | +1 |
| 11 | 1 | 1 | +1 | -j | -1 | +j | +1 | +1 |
| 12 | 0 | 0 | +1 | +j | -1 | -j | +1 | -1 |
| 13 | 0 | 0 | +1 | -j | -1 | +j | +1 | -1 |
| 14 | 1 | 1 | +1 | +j | -1 | -j | +1 | -1 |
| 15 | 1 | 1 | +1 | -j | -1 | +j | +1 | -1 |

FIG. 14

EP 4 645 784 A1

Parameters for PDSCH DM-RS configuration eType1.

| $p$ | CDM group $\lambda$ | $\Delta$ | $w_f(k')$ | | | | $w_t(l')$ | |
|---|---|---|---|---|---|---|---|---|
| | | | $k'=0$ | $k'=1$ | $k'=2$ | $k'=3$ | $l'=0$ | $l'=1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +1 | -1 | -1 | +1 | +1 |
| 1009 | 0 | 0 | +1 | -1 | -1 | +1 | +1 | +1 |
| 1010 | 1 | 1 | +1 | +1 | -1 | -1 | +1 | +1 |
| 1011 | 1 | 1 | +1 | -1 | -1 | +1 | +1 | +1 |
| 1012 | 0 | 0 | +1 | +1 | -1 | -1 | +1 | -1 |
| 1013 | 0 | 0 | +1 | -1 | -1 | +1 | +1 | -1 |
| 1014 | 1 | 1 | +1 | +1 | -1 | -1 | +1 | -1 |
| 1015 | 1 | 1 | +1 | -1 | -1 | +1 | +1 | -1 |

FIG. 15

EP 4 645 784 A1

Parameters for PUSCH DM-RS configuration eType2.

| $p$ | CDM group $\lambda$ | $\Delta$ | $w_f(k')$ | | | | $w_t(l')$ | |
|---|---|---|---|---|---|---|---|---|
| | | | $k'=0$ | $k'=1$ | $k'=2$ | $k'=3$ | $l'=0$ | $l'=1$ |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | +1 | +1 | +1 |
| 5 | 2 | 4 | +1 | -1 | +1 | -1 | +1 | +1 |
| 6 | 0 | 0 | +1 | +1 | +1 | +1 | +1 | -1 |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +j | -1 | -j | +1 | +1 |
| 13 | 0 | 0 | +1 | -j | -1 | +j | +1 | +1 |
| 14 | 1 | 2 | +1 | +j | -1 | -j | +1 | +1 |
| 15 | 1 | 2 | +1 | -j | -1 | +j | +1 | +1 |
| 16 | 2 | 4 | +1 | +j | -1 | -j | +1 | +1 |
| 17 | 2 | 4 | +1 | -j | -1 | +j | +1 | +1 |
| 18 | 0 | 0 | +1 | +j | -1 | -j | +1 | -1 |
| 19 | 0 | 0 | +1 | -j | -1 | +j | +1 | -1 |
| 20 | 1 | 2 | +1 | +j | -1 | -j | +1 | -1 |
| 21 | 1 | 2 | +1 | -j | -1 | +j | +1 | -1 |
| 22 | 2 | 4 | +1 | +j | -1 | -j | +1 | -1 |
| 23 | 2 | 4 | +1 | -j | -1 | +j | +1 | -1 |

FIG. 16

EP 4 645 784 A1

Parameters for PDSCH DM-RS configuration eType2.

| $p$ | CDM group $\lambda$ | $\Delta$ | $w_t(k')$ | | | | $w_t(l')$ | |
|---|---|---|---|---|---|---|---|---|
| | | | $k'=0$ | $k'=1$ | $k'=2$ | $k'=3$ | $l'=0$ | $l'=1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +1 | -1 | -1 | +1 | +1 |
| 1013 | 0 | 0 | +1 | -1 | -1 | +1 | +1 | +1 |
| 1014 | 1 | 2 | +1 | +1 | -1 | -1 | +1 | +1 |
| 1015 | 1 | 2 | +1 | -1 | -1 | +1 | +1 | +1 |
| 1016 | 2 | 4 | +1 | +1 | -1 | -1 | +1 | +1 |
| 1017 | 2 | 4 | +1 | -1 | -1 | +1 | +1 | +1 |
| 1018 | 0 | 0 | +1 | +1 | -1 | -1 | +1 | -1 |
| 1019 | 0 | 0 | +1 | -1 | -1 | +1 | +1 | -1 |
| 1020 | 1 | 2 | +1 | +1 | -1 | -1 | +1 | -1 |
| 1021 | 1 | 2 | +1 | -1 | -1 | +1 | +1 | -1 |
| 1022 | 2 | 4 | +1 | +1 | -1 | -1 | +1 | -1 |
| 1023 | 2 | 4 | +1 | -1 | -1 | +1 | +1 | -1 |

FIG. 17

EP 4 645 784 A1

| DM-RS antenna port | $k_{ref}^{RE}$ | | | | | | | |
| --- | --- | --- | --- | --- | --- | --- | --- | --- |
| | DM-RS Configuration eType 1 | | | | DM-RS Configuration eType 2 | | | |
| | resourceElementOffset | | | | resourceElementOffset | | | |
| | offset00 | offset01 | offset10 | offset11 | offset00 | offset01 | offset10 | offset11 |
| 0 | | | | | | | | |
| 1 | | | | | | | | |
| 2 | | | | | | | | |
| 3 | | | | | | | | |
| 4 | | | | | | | | |
| 5 | | | | | | | | |
| 6 | | | | | | | | |
| 7 | | | | | | | | |

FIG. 18

## FIG. 19A

| DM-RS antenna port | $k_{ref}^{RE}$ | | | | | | | |
|---|---|---|---|---|---|---|---|---|
| | *DM-RS Configuration e Type 1* | | | | *DM-RS Configuration e Type 2* | | | |
| | *resourceElementOffset* | | | | *resourceElementOffset* | | | |
| | offset00 | offset01 | offset10 | offset11 | offset00 | offset01 | offset10 | offset11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | 4 | 6 | 10 | 0 | 4 | 5 | 10 | 11 |
| 5 | 6 | 8 | 0 | 2 | 5 | 10 | 11 | 4 |
| 6 | 5 | 7 | 11 | 1 | 6 | 0 | 4 | 10 |
| 7 | 7 | 9 | 1 | 3 | 7 | 2 | 5 | 3 |

## FIG. 19B

| DM-RS antenna port | $k_{ref}^{RE}$ | | | | | | | |
|---|---|---|---|---|---|---|---|---|
| | *DM-RS Configuration e Type 1* | | | | *DM-RS Configuration e Type 2* | | | |
| | *resourceElementOffset* | | | | *resourceElementOffset* | | | |
| | offset00 | offset01 | offset10 | offset11 | offset00 | offset01 | offset10 | offset11 |
| 0 | 0 | 2 | 6 | 8 | 0 | 1 | 6 | 7 |
| 1 | 6 | 5 | 5 | 5 | 1 | 6 | 5 | 10 |
| 2 | 9 | 6 | 2 | 6 | 2 | 9 | 2 | 7 |
| 3 | 1 | 7 | 6 | 4 | 3 | 3 | 10 | 5 |
| 4 | 7 | 10 | 4 | 10 | 4 | 10 | 11 | 3 |
| 5 | 10 | 11 | 3 | 3 | 5 | 5 | 0 | 4 |
| 6 | 2 | 8 | 10 | 9 | 6 | 4 | 4 | 2 |
| 7 | 8 | 3 | 11 | 1 | 7 | 7 | 3 | 1 |

EP 4 645 784 A1

# FIG. 20A

|  | DMRS configuration eType1 | | | |
|---|---|---|---|---|
|  | offset00 | offset01 | offset10 | offset11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 4 | 4 | 6 | 10 | 0 |
| 5 | 6 | 8 | 0 | 2 |
| 6 | 5 | 7 | 11 | 1 |
| 7 | 7 | 9 | 1 | 3 |
| ... |  |  |  |  |

# FIG. 20B

|  | DMRS configuration eType1 | | | |
|---|---|---|---|---|
|  | offset00 | offset01 | offset10 | offset11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 4 | 6 | 8 | 0 | 2 |
| 5 | 8 | 10 | 2 | 4 |
| 6 | 7 | 9 | 1 | 3 |
| 7 | 9 | 11 | 3 | 5 |
| ... |  |  |  |  |

# FIG. 20C

|  | DM-RS Configuration eType 2 | | | |
|---|---|---|---|---|
|  | resourceElementOffset | | | |
|  | offset00 | offset01 | offset10 | offset11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 6 | 6 | 7 | 0 | 1 |
| 7 | 7 | 0 | 1 | 6 |
| 8 | 8 | 9 | 2 | 3 |
| 9 | 9 | 2 | 3 | 8 |
| 10 | 10 | 11 | 4 | 5 |
| 11 | 11 | 4 | 5 | 10 |
| ... |  |  |  |  |

EP 4 645 784 A1

# FIG. 21A

Parameters for PUSCH DM-RS configuration eType1.

| DM-RS antenna port | $k_{ref}^{RE}$ | | | |
|---|---|---|---|---|
| | resourceElementOffset | | | |
| | offset00 | Offset01 | offset10 | offset11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 4 | 6 | 10 | 0 |
| 9 | 6 | 8 | 0 | 2 |
| 10 | 5 | 7 | 11 | 1 |
| 11 | 7 | 9 | 1 | 3 |

# FIG. 21B

Parameters for PUSCH DM-RS configuration eType2.

| DM-RS antenna port | $k_{ref}^{RE}$ | | | |
|---|---|---|---|---|
| | resourceElementOffset | | | |
| | offset00 | offset01 | offset10 | offset11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 12 | 6 | 7 | 0 | 1 |
| 13 | 7 | 0 | 1 | 6 |
| 14 | 8 | 9 | 2 | 3 |
| 15 | 9 | 2 | 3 | 8 |
| 16 | 10 | 11 | 4 | 5 |
| 17 | 11 | 4 | 5 | 10 |

| DM-RS antenna port | $k_{ref}^{RE}$ | | | | | | | |
|---|---|---|---|---|---|---|---|---|
| | DM-RS Configuration eType 1 | | | | DM-RS Configuration eType 2 | | | |
| | resourceElementOffset | | | | resourceElementOffset | | | |
| | offset00 | offset01 | offset10 | offset11 | offset00 | offset01 | offset10 | offset11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | - | - | - | - | 4 | 5 | 10 | 11 |
| 5 | - | - | - | - | 5 | 10 | 11 | 4 |
| 8 | 4 | 6 | 10 | 0 | - | - | - | - |
| 9 | 6 | 8 | 0 | 2 | - | - | - | - |
| 10 | 5 | 7 | 11 | 1 | - | - | - | - |
| 11 | 7 | 9 | 1 | 3 | - | - | - | - |
| 12 | - | - | - | - | 6 | 7 | 0 | 1 |
| 13 | - | - | - | - | 7 | 0 | 1 | 6 |
| 14 | - | - | - | - | 8 | 9 | 2 | 3 |
| 15 | - | - | - | - | 9 | 2 | 3 | 8 |
| 16 | - | - | - | - | 10 | 11 | 4 | 5 |
| 17 | - | - | - | - | 11 | 4 | 5 | 10 |

FIG. 22

EP 4 645 784 A1

## FIG. 23A

Parameters for PUSCH DM-RS configuration eType1.

| DM-RS antenna port | $k_{ref}^{RE}$ | | | |
|---|---|---|---|---|
| | resourceElementOffset | | | |
| | offset00 | Offset01 | offset10 | offset11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 0 | 2 | 6 | 8 |
| 9 | 2 | 4 | 8 | 10 |
| 10 | 1 | 3 | 7 | 9 |
| 11 | 3 | 5 | 9 | 11 |

## FIG. 23B

Parameters for PUSCH DM-RS configuration eType2.

| DM-RS antenna port | $k_{ref}^{RE}$ | | | |
|---|---|---|---|---|
| | resourceElementOffset | | | |
| | offset00 | offset01 | offset10 | offset11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 12 | 0 | 1 | 6 | 7 |
| 13 | 1 | 6 | 7 | 0 |
| 14 | 2 | 3 | 8 | 9 |
| 15 | 3 | 8 | 9 | 2 |
| 16 | 4 | 5 | 10 | 11 |
| 17 | 5 | 10 | 11 | 4 |

| DM-RS antenna port | $k_{ref}^{RE}$ | | | | | | | |
|---|---|---|---|---|---|---|---|---|
| | DM-RS Configuration eType 1 | | | | DM-RS Configuration eType 2 | | | |
| | resourceElementOffset | | | | resourceElementOffset | | | |
| | offset00 | offset01 | offset10 | offset11 | offset00 | offset01 | offset10 | offset11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | - | - | - | - | 4 | 5 | 10 | 11 |
| 5 | - | - | - | - | 5 | 10 | 11 | 4 |
| 8 | 0 | 2 | 6 | 8 | - | - | - | - |
| 9 | 2 | 4 | 8 | 10 | - | - | - | - |
| 10 | 1 | 3 | 7 | 9 | - | - | - | - |
| 11 | 3 | 5 | 9 | 11 | - | - | - | - |
| 12 | - | - | - | - | 0 | 1 | 6 | 7 |
| 13 | - | - | - | - | 1 | 6 | 7 | 0 |
| 14 | - | - | - | - | 2 | 3 | 8 | 9 |
| 15 | - | - | - | - | 3 | 8 | 9 | 2 |
| 16 | - | - | - | - | 4 | 5 | 10 | 11 |
| 17 | - | - | - | - | 5 | 10 | 11 | 4 |

FIG. 24

## FIG. 25A

Parameters for PUSCH DM-RS configuration eType1.

| DM-RS antenna port | $k_{ref}^{RE}$ | | | |
|---|---|---|---|---|
| | resourceElementOffset | | | |
| | offset00 | Offset01 | offset10 | offset11 |
| 0 | 0 | 6 | 8 | 10 |
| 1 | 6 | 8 | 10 | 4 |
| 2 | | | | |
| 3 | | | | |
| 8 | 8 | 10 | 4 | 2 |
| 9 | 10 | 4 | 2 | 0 |
| 10 | | | | |
| 11 | | | | |

Selected Combination {0,6,8,10,4,2}

DMRS port#0 {0,6,8,10}

DMRS port#1 {6,8,10,4}

DMRS port#8 {8,10,4,2}

DMRS port#9 {10,4,2,0}

## FIG. 25B

Parameters for PUSCH DM-RS configuration eType1.

| DM-RS antenna port | $k_{ref}^{RE}$ | | | |
|---|---|---|---|---|
| | resourceElementOffset | | | |
| | offset00 | Offset01 | offset10 | offset11 |
| 0 | 0 | 6 | 8 | 10 |
| 1 | 6 | 8 | 10 | 0 |
| 2 | | | | |
| 3 | | | | |
| 8 | 8 | 10 | 0 | 6 |
| 9 | 10 | 0 | 6 | 8 |
| 10 | | | | |
| 11 | | | | |

Selected Combination {0,6,8,10}

DMRS port#0 {0,6,8,10}

DMRS port#1 {6,8,10,0}

DMRS port#8 {8,10,0,6}

DMRS port#9 {10,0,6,8}

FIG. 26

FIG. 27

EP 4 645 784 A1

FIG. 28

EP 4 645 784 A1

BASE STATION 10, USER TERMINAL 20

| 1001 | 1007 | 1004 |
|---|---|---|
| PROCESSOR | | COMMUNICATION APPARATUS |
| 1002 | | 1005 |
| MEMORY | | INPUT APPARATUS |
| 1003 | | 1006 |
| STORAGE | | OUTPUT APPARATUS |

FIG. 29

FIG. 30

ROTATIONAL SPEED SENSOR 51
VEHICLE SPEED SENSOR 53
ACCELERATION SENSOR 54

ROTATIONAL SPEED SENSOR 51
VEHICLE SPEED SENSOR 53
ACCELERATION SENSOR 54

DRIVE SECTION 41

INFORMATION SERVICE SECTION 59
ELECTRONIC CONTROL SECTION 49
DRIVER-ASSISTANCE-SYSTEM SECTION 64
MICRO-PROCESSOR 61
MEMORY 62
COMMUNICATION PORT 63

COMMUNICATION MODULE 60

40  42  45  46  47  48  50  52  55  56  57  58

## INTERNATIONAL SEARCH REPORT

| International application No. |
| --- |
| **PCT/JP2022/048332** |

| A. | CLASSIFICATION OF SUBJECT MATTER |
| --- | --- |

*H04L 27/26*(2006.01)i; *H04J 13/00*(2011.01)i
FI: H04L27/26 114; H04J13/00

According to International Patent Classification (IPC) or to both national classification and IPC

| B. | FIELDS SEARCHED |
| --- | --- |

Minimum documentation searched (classification system followed by classification symbols)

H04L27/26; H04J13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | Huawei, HiSilicon, Enhancements on DMRS in Rel-18 [online], 3GPP TSG RAN WG 1 #111 R 1-2210914, 07 November 2022, Internet: <URL: https://www.3gpp.org/ftp/tsg_ran/WG 1_RL 1/TSGR 1_111/Docs/R 1-2210914.zip> particularly, section 2, "Large number of orthogonal DMRS ports" | 1-6 |
| T | MediaTek Inc., Expanding DMRS System Capacity: Seamless Extensions of Existing Patterns [online], 3GPP TSG RAN WG 1 #112 R 1-2301575, 17 February 2023, Internet: <URL: https://www.3gpp.org/ftp/tsg_ran/WG 1_RL 1/TSGR 1_112/Docs/R 1-2301574.zip> particularly, section 2, "Coexistence with Legacy DMRS Patterns" | 1-6 |

☐ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 July 2023** | **18 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010